(19) Europäisches Patentamt
European Patent Office
Office européen des brevets

(11) **EP 1 540 201 B1**

(12) **EUROPÄISCHE PATENTSCHRIFT**

(45) Veröffentlichungstag und Bekanntmachung des Hinweises auf die Patenterteilung:
**15.12.2010 Patentblatt 2010/50**

(21) Anmeldenummer: **03753283.5**

(22) Anmeldetag: **10.09.2003**

(51) Int Cl.:
*F16F 15/00* *(2006.01)*

(86) Internationale Anmeldenummer:
**PCT/DE2003/002989**

(87) Internationale Veröffentlichungsnummer:
**WO 2004/027285 (01.04.2004 Gazette 2004/14)**

(54) **VERFAHREN ZUM VERMINDERN VON RUPFSCHWINGUNGEN**

METHOD FOR REDUCING JUDDERING VIBRATIONS

PROCEDE POUR REDUIRE DES VIBRATIONS DE GRIPPAGE

(84) Benannte Vertragsstaaten:
**AT BE BG CH CY CZ DE DK EE ES FI FR GB GR HU IE IT LI LU MC NL PT RO SE SI SK TR**

(30) Priorität: **12.09.2002 DE 10242225**

(43) Veröffentlichungstag der Anmeldung:
**15.06.2005 Patentblatt 2005/24**

(73) Patentinhaber: **Schaeffler Technologies GmbH & Co. KG**
**91074 Herzogenaurach (DE)**

(72) Erfinder: **SEREBRENNIKOV, Boris**
**77815 Bühl-Kappelwindeck (DE)**

(56) Entgegenhaltungen:

EP-A- 0 651 158    DE-A- 3 404 154
DE-A- 4 009 792    DE-A- 10 035 521
DE-A- 19 536 320    DE-A- 19 628 789
DE-A- 19 949 449    DE-A- 19 954 552
US-A- 5 759 133

**Beschreibung**

Die Erfindung betrifft Verfahren zum Vermindern von Rupfschwingungen sowie ein elektronisches Steuergerät.

Elektronische Steuergeräte sind bereits bekannt. Sie werden beispielsweise im Kraftfahrzeugbereich verwendet, um bestimmte Funktionalitäten von Bauelementen, wie Getriebe, Kupplung, Brennkraftmaschine oder dergleichen, zu steuern.

Ein bekanntes Verfahren zum Vermindern bzw. Abbau von Rupfschwingungen, die im Antriebsstrang eines Kraftfahrzeugs gegeben sind, ist so, dass das Fahrzeug zum Stillstand gebracht wird. Hierbei kann beispielsweise eine Betriebsbremse betätigt werden und der geschaltete Gang herausgenommen werden. Wenn das Fahrzeug zum Stillstand gekommen ist und die Anfahrkupplung vollständig geöffnet ist, sind Rupfschwingungen in aller Regel abgebaut.

Die Offenlegungsschrift DE 195 36 320 A1 offenbart eine Vorrichtung zum Ändern eines Nutzmoments in einem Antriebsstrang eines Kraftfahrzeugs. Die Vorrichtung umfasst eine Recheneinrichtung zum Berechnen des Wertes einer Stellgröße für ein, das Nutzmoment beeinflussendes Stellglied in Abhängigkeit des Betriebszustandes des Kraftfahrzeugs, sowie eine Steuereinrichtung zum Steuern des Stellglieds auf Grundlage des Stellgrößenwerts und ferner eine Zerlegungseinrichtung zum Zerlegen des Stellgrößenwertes in einen ersten Teilwert und wenigstens einen weiteren Teilwert. Der in zwei Einzelwerte zerlegte Stellgrößenwert für eine automatisiert betätigte Reibungskupplung kann zur Kompensation von Rupfschwingungen verwendet werden.

Der Erfindung liegt die Aufgabe zugrunde, ein Verfahren zum Vermindern von Rupfschwingungen zu schaffen, welches betriebssicher ist und einen guten Komfort gewährleistet.

Die erfindungsgemäße Aufgabe wird gelöst durch ein Verfahren zum Vermindern von Rupfschwingungen in einem Kraftfahrzeug-Antriebsstrang, der von einer Antriebseinrichtung, wie Brennkraftmaschine, belastet werden kann und eine Kupplungseinrichtung sowie eine Getriebeeinrichtung aufweist, mit den Schritten:

- Ermitteln, ob Rupfschwingungen gegeben sind, und / oder Feststellen, dass Rupfschwingungen gegeben sind;
- Verstellen, und zwar insbesondere automatisches Verstellen, einer Einrichtung, um den Rupfschwingungen entgegenzuwirken, wobei diese Einrichtung so im Antriebsstrang angeordnet oder mit diesem gekoppelt ist, dass durch eine Verstellung dieser Einrichtung ein einem Antriebstrangbauteil, zugeordneter Drehkennwert, wie Drehmoment oder Drehzahl, verändert wird und durch diese Veränderung der zeitliche Verlauf der Rupfschwingung verändert wird, dadurch gekennzeichnet, dass das von der Kupplungseinrichtung übertragbare Drehmoment und / oder der Kupplungsweg moduliert wird, um den Rupfschwingungen entgegenzuwirken.

Es ist also insbesondere ein Verfahren zum Vermindern von Rupfschwingungen vorgesehen, die in einem Kraftfahrzeugsantriebsstrang auftreten können. Dieser Kraftfahrzeugantriebsstrang kann von einer Antriebseinrichtung belastet werden. Eine solche Antriebseinrichtung kann beispielsweise eine Brennkraftmaschine sein. In dem Antriebsstrang ist ferner eine Kupplungseinrichtung sowie eine Getriebeeinrichtung vorgesehen. Die Kupplungseinrichtung kann beispielsweise eine elektronisch gesteuerte Kupplungseinrichtung sein. Eine solche elektronisch gesteuerte Kupplungseinrichtung kann beispielsweise so gestaltet sein, wie eine elektronisch gesteuerte Kupplungseinrichtung, die von der Anmelderin unter der Bezeichnung "Elektronisches Kupplungsmanagement (EKM)" angeboten wird. Eine elektronisch gesteuerte Kupplungseinrichtung kann allerdings auch anders gestaltet sein.

Die Getriebeeinrichtung kann beliebiger Art sein. Sie kann so geschaltet werden, dass unterschiedliche Übersetzungen eingestellt werden können. Sie kann insbesondere Schaltstufen aufweisen oder stufenlos schaltbar sein. Beispielsweise kann die Getriebeeinrichtung ein Automatikgetriebe oder ein automatisiertes Schaltgetriebe (ASG) oder ein stufenloses Getriebe (CVT) sein. Auch andere Getriebearten können verwendet werden.

Das Verfahren zum Vermindern von Rupfschwingungen kann insbesondere so sein, dass die Rupfschwingungen "abgeschwächt" werden, ohne dass sie beseitigt werden. Dies muss allerdings nicht bedeuten, dass die Rupfschwingungen unmittelbar verringert bzw. beseitigt werden. Das Verfahren kann auch so sein, dass erst im Laufe der Verfahrens den Rupfschwingungen entgegengewirkt wird, während gegebenenfalls zwischenzeitlich die Rupfschwingungen sogar, insbesondere ungewollt, unterstützt werden. Das Verfahren kann aber auch so sein, dass unmittelbar den Rupfschwingungen entgegengewirkt wird.

Erfindungsgemäß ist insbesondere vorgesehen, dass geprüft bzw. ermittelt wird, ob Rupfschwingungen gegeben sind. Dies muss nicht bedeuten, dass absolut sichergestellt ist, dass die Rupfschwingungen gegeben sind. Es kann beispielsweise vorgesehen sein, dass nicht ausgeschlossen wird oder angenommen wird, dass bzw. ob Rupfschwingungen gegeben sind. Das Ermitteln der Rupfschwingungen kann auch so sein, dass zusätzlich bestimmte Maßnahmen ergriffen werden, aus welchen geschlossen wird, dass Rupfschwingungen gegeben sind. Dies kann beispielsweise, und es bestehen auch viele weitere Möglichkeiten, so sein, dass die Drehzahl der Getriebeeingangswelle untersucht wird und ein schwingender Verlauf bzw. ein Verlauf, bei dem eine Schwingung verlagert ist, als Anzeichen dafür gewertet wird, dass Rupfschwingungen gegeben sind.

Erfindungsgemäß ist ferner insbesondere vorgesehen, dass eine Einrichtung verstellt wird, um den Rupfschwingungen entgegenzuwirken. Dieses Verstellen erfolgt vorzugsweise automatisch und / oder elektronisch gesteuert. Die Einrichtung, die verstellt wird, ist im Antriebsstrang so angeordnet oder mit diesem gekoppelt, dass durch Verstellung dieser Einrichtung ein Drehkennwert verändert wird, der einem Antriebsstrangbauteil zugeordnet ist. Ein solcher Drehkennwert kann insbesondere ein Drehmoment oder eine Drehzahl sein. Die genannte Einrichtung ist in einer bevorzugten Gestaltung die Kupplungseinrichtung. Diese Einrichtung kann allerdings auch eine andere Einrichtung sein. Beispielsweise kann diese Einrichtung auch der Motor bzw. eine Drosselklappe oder dergleichen sein. So könnte beispielsweise der Drosselklappenwinkel verändert werden, um die Motordrehzahl oder das Motordrehmoment zu verändern. Bevorzugt ist ferner, dass durch bestimmte Schaltvorgänge des Getriebes Rupfschwingungen entgegengewirkt wird.

Zur Vereinfachung soll die Erfindung allerdings anhand einer Gestaltung dargestellt werden, bei der die angesprochene Einrichtung eine Kupplungseinrichtung ist und durch eine Verstellung dieser Kupplungseinrichtung ein einem Antriebsstrangbauteil zugeordneter Drehkennwert verändert wird. Es sei allerdings angemerkt, dass bevorzugt auch anstelle dieser Kupplungseinrichtung eine andere Einrichtung entsprechend benutzt werden kann.

Erfindungsgemäß ist insbesondere vorgesehen, dass durch die Verstellung der Einrichtung, also im bevorzugten Beispiel einer Kupplungseinrichtung, der zeitliche Verlauf der Rupfschwingung verändert wird. Dieses Verändern ist bevorzugt so, dass die Rupfschwingung vermindert oder sogar abgebaut wird.

Rupfschwingungen sind im Sinne der Erfindung insbesondere Schwingungen des Getriebeeingangs gegen das Fahrzeug. Quantitativ lässt sich das Rupfen durch die relative Drehgeschwindigkeit $\omega_{Rupfen}$ darstellen, die insbesondere der Differenz der Winkel- bzw. Drehgeschwindigkeit des Getriebeeingangs einerseits und dem Produkt aus der geschalteten Gangübersetzung ($i_{Gang}$) bzw. der dem geschalteten Gang zugeordneten Übersetzung und der Winkel- bzw. Drehgeschwindigkeit des getriebenen Rades ($\omega_{Rad}$) darstellen lässt. Es könnten aber gegebenenfalls auch weitere Übersetzungen Berücksichtigung finden. Durch den angegebenen Zusammenhang soll die Erfindung allerdings nicht beschränkt werden. Es kann auch Gestaltungen geben, bei denen sich das Rupfen quantitativ auf andere Weise ausdrücken lässt.

Das erfindungsgemäße Verfahren kann insbesondere auch zum Vermindern von selbsterregten Rupfschwingungen verwendet werden. Beim selbsterregten Rupfen schwingt die relative Drehgeschwindigkeit bzw. Winkelgeschwindigkeit des Rupfens ($\omega_{Rupfen}$) mit einer Eigenfrequenz, die beispielsweise im Bereich von 10 Hz liegen kann. Aber auch andere Frequenzwerte sind möglich.

Bei vielen Kupplungen besteht ein Zusammenhang zwischen dem von der Kupplung übertragbaren Drehmoment und dem Kupplungsweg. Es kann aber auch Kupplungen geben, bei denen beispielsweise das übertragbare Drehmoment verändert werden kann, ohne dass ein Kupplungsweg verändert wird. Ebenso kann der Zusammenhang zwischen dem übertragbaren Drehmoment und dem Kupplungsweg zumindest teilweise so sein, dass eine Wegänderung nicht oder nicht immer zu einer Veränderung des übertragbaren Drehmoments führt. Als Beispiel hierfür sei genannt, dass eine Kupplung so weit geöffnet ist, dass sie kein Drehmoment mehr überträgt; bei derartigen Kupplungen ist häufig vorgesehen, dass der Kupplungsweg in diesem offenen Zustand, in dem kein Drehmoment übertragen wird, verändert werden kann.

Zur Vereinfachung wird im folgenden Bezug auf solche Gestaltungen von einer Veränderung der Modulation des Kupplungsweges gesprochen. Es sei allerdings angemerkt, dass ebenfalls eine Modulation oder Veränderung des von der Kupplung übertragbaren Drehmoments vorgesehen sein kann. Bei der bevorzugten Gestaltung ist also besonders bevorzugt vorgesehen, dass, auch wenn nur der Kupplungsweg erwähnt wird, sich die entsprechenden Gestaltungen auf das von der Kupplung übertragbare Drehmoment beziehen.

Es sei angemerkt, dass das übertragbare Kupplungsmoment bzw. von der Kupplung übertragbare Drehmoment besonders bevorzugt das Kupplungssollmoment ist und der Kupplungsweg besonders bevorzugt der Kupplungssollweg ist. Diese Sollgrößen können beispielsweise von einer Steuereinrichtung vorgegeben werden und anschließend angesteuert werden. Dies bezieht sich insbesondere auch auf Kennwerte, die moduliert werden.

Besonders bevorzugt ist vorgesehen, dass der Kupplungsweg zum Vermindern der Schwingungen schwingungsförmig, insbesondere sinusförmig, moduliert wird. Diese Modulation kann insbesondere so sein, dass einer jeweils gegebenen bzw. angesteuerten Kupplungsposition bzw. einem Kupplungsweg bzw. dem zeitlichem Verlauf dieser Größen eine Sinusfunktion überlagert wird.

In einer bevorzugten Gestaltung wird ein vorbestimmter Kennwert des zeitlichen Verlaufs der Rupfschwingung und / oder ein Drehkennwert eines Antriebsstrangbauteils ermittelt. Ein solcher Kennwert bzw. Drehkennwert kann beispielsweise die Getriebeeingangsdrehzahl sein. Die Getriebeeingangsdrehzahl kann beispielsweise auch dazu verwendet werden, um zu überprüfen, ob Rupfschwingungen gegeben sind.

Dieser Kennwert bzw. Drehkennwert kann beispielsweise auch abgeschätzt oder berechnet oder gemessen werden. Ein solcher Kennwert kann beispielsweise auch die Amplitude und / oder die Periodendauer und / oder die Phase der Rupfschwingung bzw. der Winkelgeschwindigkeit oder Drehzahl eines Antriebsbauteils sein.

Besonders bevorzugt ist vorgesehen, dass die Phase und / oder die Amplitude und / oder die Dauer der Rupfschwingung in Abhängigkeit der Getriebedrehzahl bzw. in Abhängigkeit des zeitlichen Verlaufs der Getriebeeingangsdrehzahl ermittelt wird.

In einer bevorzugten Gestaltung wird die Phase und/ oder die Amplitude und/ oder die Periodendauer der Schwingungsmodulation des Kupplungsweges in Abhängigkeit der Drehzahl ermittelt. Die Getriebeeingangsdrehzahl kann beispielsweise abgeschätzt oder berechnet werden. In einer bevorzugten Gestaltung wird die Getriebeeingangsdrehzahl gemessen, wobei eine geeignete Messeinrichtung vorgesehen ist. Eine solche Messeinrichtung kann auf verschiedenste Art gestaltet sein. Eine bevorzugte Messeinrichtung ist so gestaltet, dass Drehzahlsignale zeitlich beabstandet bereitgestellt werden.

In einer bevorzugten Gestaltung ist vorgesehen, dass die Periode und / oder die Phase und / oder die Amplitude des modulierten Kupplungsweges in Abhängigkeit von wenigstens einem lokalen Extremum der Getriebeeingangsdrehzahl ermittelt wird. Dieses lokale Extremum kann insbesondere ein lokales Maximum sein.

Das lokale Extremum der Getriebeeingangsdrehzahl kann dabei insbesondere berechnet oder abgeschätzt oder gemessen sein.

Bevorzugt ist ferner, dass das lokale Extremum mehrfach bestimmt wird. Dabei kann beispielsweise der Genauigkeitsgrad dieser Bestimmung zunehmen. Beispielsweise kann zunächst vorgesehen sein, dass ein solches lokales Extremum anhand zeitlich beabstandeter Messwerte bestimmt wird und anschließend die Genauigkeit erhöht wird, indem es in Abhängigkeit dieser Messwerte ggf. weiterer Faktoren berechnet wird.

Bevorzugt ist ferner, dass derartige lokale Extrema im zeitlichen Verlauf der Getriebeeingangsdrehzahl, die insbesondere lokale Maxima sein können, zur Bestimmung der Phase der Getriebeeingangsdrehzahl verwendet werden. Auch bei dieser Gestaltung kann vorgesehen sein, dass die Getriebeeingangsdrehzahl dabei gemessen oder berechnet oder abgeschätzt wurde. Ferner kann, wie zuvor dargestellt, auch diesbezüglich eine mehrfache Ermittlung der lokalen Extrema bzw. der Phase vorgenommen werden, und zwar insbesondere so, dass der Genauigkeitsgrad gesteigert wird.

Insbesondere bei der Bestimmung der Phase der Getriebeeingangsdrehzahl oder der Rupfschwingung kann vorgesehen sein, dass unterschiedliche Einflüsse, die zu einer Abweichung der zeitlichen Lage der zunächst ermittelten Extrema bzw. Maxima gegenüber dem tatsächlichen führen könnten, berücksichtigt werden, um genauere Werte für die Extrema, insbesondere Maxima, der Getriebeeingangsdrehzahl bzw. der Rupfschwingung zu erhalten.

In einer bevorzugten Gestaltung wird die Modulation des Kupplungsweges so vorgenommen, dass, im Rahmen der Genauigkeit, die Phase und die Periode im wesentlichen derjenigen der Drehzahl der Getriebeeingangswelle entspricht, bzw. die in Bezug auf Drehzahl der Getriebeeingangswelle ermittelt wurden. Bevorzugt ist ferner, dass die Amplitude des modulierten Kupplungsweges proportional der Rupfamplitude der Getriebeeingangsdrehzahl vorgegeben wird. Die Rupfamplitude wird besonderes bevorzugt aus einem Vergleich zwischen der gefilterten und der ungefilterten Getriebeeingangsdrehzahl definiert. Dabei ist insbesondere vorgesehen, dass die Getriebeeingangsdrehzahl einerseits als Getriebeeingangsdrehzahl mit schwingendem Anteil betrachtet wird und andererseits als Getriebeeingangsdrehzahl ohne schwingenden Anteil; letztere kann insbesondere eine gemittelte Getriebeeingangsdrehzahl sein. Die nicht-schwingende ist dabei die gefilterte, während die schwingende die ungefilterte ist. In einer bevorzugten Gestaltung ist weiter vorgesehen, dass zumindest zunächst und in einem ersten Schritt, die Amplitude der Getriebeeingangsdrehzahl so bestimmt wird, dass in bestimmten Auswerteperioden bzw. -interrupten die Drehzahl bestimmt wird. Diese Interrupte können eine bestimmte Dauer haben, wie beispielsweise 2,5 ms oder 5 ms oder 10 ms. Auch andere Werte für diese Dauer sind bevorzugt. Es kann auch eine andere Art der Drehzahlmessung bzw. -ermittlung vorgesehen sein.

Bei einer solchen bevorzugten Gestaltung, bei der die Drehzahl in vorbestimmten Interrupten bestimmt wird, kann insbesondere vorgesehen sein, dass während dieses Intervalls Pulse eines Drehgeber gezählt werden und ins Verhältnis zur Zeit gesetzt werden. Bei der Maximalsuche kann beispielsweise überprüft werden, wie sich die jeweiligen Drehzahl- bzw. Drehgeschwindigkeitswerte die insbesondere jeweils einem derartigen Interrupt zugeordnet sein können, im Vergleich zu benachbarten Drehzahl- bzw. Drehgeschwindigkeitswerten verhalten. Anhand eines solchen Vergleiches kann beispielsweise ein lokales Maximum für die Drehzahl bzw. Drehgeschwindigkeit bestimmt werden. In einer bevorzugten Gestaltung ist vorgesehen, dass ein erster Kennwert der Rupfschwingung und / oder des zeitlichen Verlaufs der Getriebeeingangsdrehzahl, insbesondere ein Extremum, wie Maximum, mittels einer Abschätzung und / oder einer Berechnung und / oder einer Messung in einem ersten Schritt ermittelt wird. Dies kann beispielsweise so sein, dass eine Maximasuche in der vorerwähnten Weise durchgeführt wird.

Bevorzugt wird dieser erste Kennwert in einem zweiten Schritt in Abhängigkeit des Ergebnisses des ersten Schritts zur Verbesserung und / oder Überprüfung der Genauigkeit des im ersten Schritt ermittelten Kennwerts ermittelt. Hierzu können beispielsweise Berechnungen durchgeführt werden oder andere Maßnahmen, die die Genauigkeit erhöhen. Bei einer bevorzugten, sehr speziellen Gestaltung der Erfindung kann beispielsweise vorgesehen sein, dass anhand von zeitlich beabstandeten Drehzahlsignalen, die beispielsweise in vorgenannter Weise mittels eines Drehgebers ermittelt wurden, lokale Maxima durch Vergleich mit benachbarten Signalen ermittelt werden. Anschließend kann die Abweichung der zeitlichen Lage eines tatsächlichen Maximus beispielsweise durch Berechnung ermittelt werden. Anhand solcher Berechnungen können beispielsweise Abweichungen berücksichtigt werden, die unterschiedliche Ursachen haben, wie beispielsweise eine Abweichung, die darauf zurückzuführen ist, dass Drehzahl- bzw. Drehgeschwindigkeitssignale jeweils nur zeitlich beabstandet bereitgestellt werden, oder Abweichungen, die durch einen nicht-schwingenden Anteil des zeitlichen Verlaufs der Drehzahl bedingt sind, oder Abweichungen die durch die Auswertung bedingt sind. Es sei angemerkt, dass die Erfindung durch bevorzugte, beispielhafte, Gestaltungen nicht beschränkt werden soll. Insbesondere kann eine Vielzahl weiterer Ausführungsbeispiele vorgesehen sein, bei denen zunächst ein Kennwert im ersten Schritt ermittelt wird und dann die Genauigkeit in einem zweiten Schritt verbessert oder überprüft wird.

Ein solcher Kennwert kann insbesondere ein lokales Extremum des zeitlichen Verlaufs der Getriebeeingangsdrehzahl sein.

Bevorzugt ist auch, dass anhand dieses Kennwerts, der in einem ersten und in einem zweiten Schritt ermittelt wird, bzw. die Differenz dieser in unterschiedlich Schritten ermittelten Kennwerte weitere Charakteristika, wie beispielsweise die Phase der Getriebeeingangsdrehzahl ermittelt wird.

Besonders bevorzugt ist vorgesehen, dass die Getriebeeingangsdrehzahl nur gemessen und / oder ausgewertet wird, dass zeitlich beabstandet Drehzahlmesser bereitgestellt werden. In einem ersten Schritt kann bei dieser Gestaltung wenigstens ein lokales Extremum, wie beispielsweise lokales Maximum, dieser Messwerte ermittelt werden. Dies kann beispielsweise so sein, dass durch einen Vergleich mit den benachbarten Messwerten des zeitlichen Verlaufs das lokale Extremum ermittelt wird. Insbesondere kann vorgesehen sein, dass für den Fall dass mehrer Lokale Extrema festgestellt werden, das zuletzt aufgetretene ausgewählt wird. Bei dieser bevorzugten Gestaltung kann das lokale Extremum ggf. von dem tatsächlichen lokalen Extremum abweichen, da nur einzelne, zeitlich beabstandete Messwerte, die ggf. auch Durchschnittswerte sind, berücksichtigt werden. Bei dieser bevorzugten Gestaltung ist besonders bevorzugt vorgesehen, dass in einem zweiten Schritt das tatsächliche lokale Extremum bzw. Maximum der Getriebeeingangsdrehzahl weiter angenähert wird bzw. ermittelt wird. Bevorzugt ist ferner, dass der Zeitabstand bzw. die Abweichung zwischen der zeitlichen Lage des im ersten Schritt ermittelten Extremum und dem im zweiten Schritt ermittelten lokalen Extremum bzw. lokalen Maximum, ermittelt wird.

Im folgenden wird zur Vereinfachung lediglich von lokalen Maximum gesprochen, wobei anzumerken ist, dass durchaus ein lokales Minimum verwendet werden kann. Je nach Verwendungszweck können ggf. auch andere charakteristische Werte verwendet werden. So könnten beispielsweise zur Phasenbestimmung auch Nulldurchgänge des schwingenden Anteils verwendet werden, wobei hier ggf. zu berücksichtigen wäre, ob der schwingende Anteil vom negativen Bereich in den positiven Bereich übergeht oder umgekehrt.

In einer bevorzugten Gestaltung wird in einem ersten Schritt die Phasenlage der Getriebeeingangsdrehzahl ermittelt, und zwar insbesondere grob ermittelt. Hierzu könnten beispielsweise lokale Extrema oder Nulldurchgänge ggf. unter Berücksichtigung der Steigung, verwendet werden. So kann ein derartiges Extremum beispielsweise ein lokales Maximum sein, das anhand von zeitlich beabstandeten Drehzahlsignalen, die ggf. jeweils für ein Interrupt bzw. eine Auswerteperiode bereitgestellt werden, verwendet wird. In bereits dargestellter Weise kann dies beispielsweise so sein, dass solche Drehzahlsignale mit benachbarten verglichen werden und anhand derartiger Vergleiche einzelne Drehzahlsignale als lokales Extremum betrachtet werden. Dabei kann vorgesehen sein, dass in einem zweiten Schritt die Abweichung zwischen der im ersten Schritt ermittelten Phasenlage und der tatsächlichen Phaselage der Getriebeeingangsdrehzahl ermittelt wird bzw. angenähert wird. Dies kann insbesondere so sein, dass anhand der Abweichung der zeitlichen Lage zwischen einem im ersten Schritt ermittelten lokalen Maximum und einem im zweiten Schritt ermittelten, dem tatsächlichen entsprechenden bzw. zumindest angenäherten, lokalen Maximum auf die Phasenverschiebung geschlossen wird.

In einer bevorzugten Gestaltung ist vorgesehen, dass bei der Ermittlung einer solchen Abweichung berücksichtigt wird, dass, sofern dies der Fall ist, im ersten Schritt zeitlich beabstandete Drehzahlsignale verwendet werden. Besonders bevorzugt ist auch, dass Messungenauigkeiten berücksichtigt werden, die direkt durch die Drehzahlmessung im ersten Schritt bedingt sind.

Ein Beispiel, durch das die Erfindung allerdings nicht beschränkt werden soll, ist so, dass eine Abweichung oder als Teil der Abweichung der Quotient aus einem Winkel $\varphi_{Puls}$ und dem doppelten eines lokalen Extremums der Winkelgeschwindigkeit $\omega_{max}$, dass im ersten Schritt ermittelt wurde, als Abweichung berücksichtigt wird. Der Winkel $\varphi_{puls}$ wäre in diesem Beispiel ein Winkel, der zwischen zwei benachbarten Zähnen eines Drehzahlgebers gegeben ist. Die vorgenannte Abweichung wird zur Vereinfachung auch $d_{Puls}$ genannt.

Bevorzugt ist ferner, dass eine (Teil-) Abweichung berücksichtigt wird, die darauf zurückzuführen ist, dass eine Steuerung bzw. Auswertung, insbesondere eine Auswertung der Getriebedrehzahl, in einem vorbestimmten Zeitfenster bzw. Zeitinterrupt ($T_{int}$) (nur) einmal statt findet und für dieses Zeitfenster also nur ein Wert für die Getriebedrehzahl berücksichtigt wird - sofern dies der Fall ist. Dies kann, um ein Beispiel zu nennen, beispielsweise so sein, dass ein mit Zähnen versehener Drehzahlgeber entsprechend seiner Zähnezahl bzw. der Zwischenräume ermöglicht, dass Pulse erfasst werden und in einem vorbestimmten Zeitintervall, wie beispielsweise 2,5 ms oder 5 ms oder 10ms, die Anzahl der Pulse gezählt wird und hieraus die Drehzahl bzw. die Windgeschwindigkeit fürs Zeitintervall abgeleitet wird. Dabei kann beispielsweise eine dadurch bedingte Abweichung von einem tatsächlichen Wert der zeitlichen Lage eines Extremums berücksichtigt werden. Dies kann beispielsweise so sein, dass die durch bedingte Abweichung, die zur Vereinfachung $d_{Interrupt}$ bzw. $d_{Int}$ genannt wird, wie folgt berechnet wird:

$$d_{interrupt} = 0,5 * T_{int} + 0,5 * (Mediane - t_{max}) * [3 * \omega_{max} / (d^2\omega/dt * T_{int}^2 + 5 / 4],$$

wobei $T_{int}$ die Dauer des Auswerte-Zeitintervalls bzw. -interrupts ist; Mediane eine Mediane ist, die den Schwerpunkt vorbestimmter Wertepaare, wie drei Wertepaare, beschreibt, die eine Zuordnung der Winkelgeschwindigkeit bzw. Drehzahl der Getriebeeingangswelle zu Zeitpunkten angibt; $t_{max}$ ein Zeitpunkt ist, bei dem ein lokales Maximum $\omega_{max}$ bzw. $\omega_i$ von $\omega$ in einem ersten Schritt festgestellt wurde; und $d^2\omega/dt$ die zweite zeitliche Ableitung von $\omega$ ist.

In einer bevorzugten Gestaltung kann auch bei der Ermittlung der Abweichung ein etwaiger Anstieg der Getriebeeingangsdrehzahl berücksichtigt werden, der im Wesentlichen von der Rupfschwingung bzw. Getriebedrehzahlschwingung unabhängig ist. Dies kann auch ein durchschnittliches Absinken der Getriebedrehzahl sein.

Diese Abweichung, die der Einfachheit halber $d_{Steigung}$ genannt wird, kann in Annäherung beschrieben werden als der Quotient aus der gesamten bzw. durchschnittlichen Steigung B der Getriebeeingangsdrehzahl und dem Produkt aus der Amplitude A bzw. dem zuletzt gemessenen Amplitudenwert des schwingenden Anteils der Getriebedrehzahl, die insbesondere dem zuletzt gefundenen bzw. festgestellten Maximum des schwingenden Anteils der Getriebedrehzahl entspricht, mit dem Quadrat von $\omega_{Rupfen}$, wobei $\omega_{Rupfen}$ dem $(2*\pi)$-fachen der Rupffrequenz entspricht.

Bevorzugt wird die Abweichung anhand des folgenden Zusammenhang ermittelt:

$$t_{Dach} - t_{max} \approx - d_{Interrupt} - d_{Steigung} - d_{Puls},$$

wobei $t_{Dach}$ der Zeitpunkt ist, bei dem das tatsächliche Extremum bzw. Maximum gegeben ist bzw. ein Wert der diesem gegen über dem bei $t_{max}$ gegebenen Wert weiter angenähert ist, und wobei "=" anzeigt, dass ein ungefährer Zusammenhang gegeben ist.

In einer bevorzugten Gestaltung wird zur bzw. bei der Ermittlung der Abweichung, also insbesondere einer Abweichung zwischen einem lokalen Extremum, wie lokalem Maximum, der in einem ersten Schritt ermittelten Getriebeeingangsdrehzahl und dem tatsächlichen Extremum bzw. dem an das tatsächliche Extremum, wie Maximum, in einem zweiten Schritt angenäherten Wert für dieses lokale Extremum bzw. lokale Maximum einer, mehrerer oder alle der folgenden Werte bzw. Kennwerte berücksichtigt:

Ein erster Kennwert ist die Interruptzeit $T_{Int}$. Diese Interruptzeit ist die Dauer einer Zeitperiode, in der eine Auswertung, bzw. Messwertauswertung, einmal stattfindet und für die ein Messwert bzw. Messwertpaar einmal bereitgestellt wird. Dies kann auch so sein, dass für diese Interruptzeit $T_{Int}$ ein Messwert bzw. Messwertpaar mehrmals bereitgestellt wird. Es kann beispielsweise eine vorbestimmte Anzahl vorgegeben sein. Die Auswertung kann insbesondere die Auswertung der Winkelgeschwindigkeit bzw. Drehzahl der Getriebeeingangswelle sein, also insbesondere des Werts, dessen Extremum bzw. Maximum bestimmt werden soll.

Ein weiterer Kennwert ist eine Mediane. Diese Mediane beschreibt den Schwerpunkt vorbestimmter Messwertpaare. Dies kann insbesondere eine Zuordnung der Winkelgeschwindigkeit bzw. Drehzahl der Getriebeeingangswelle zu Zeitpunkten sein, zu denen diese Winkelgeschwindigkeiten jeweils gegeben sind.

Beispielsweise kann vorgegeben sein, dass die Mediane als Schwerpunkt mehrerer Zuordnungspaare bestimmt wird, die der Drehzahl bzw. Winkelgeschwindigkeit der Getriebeeingangswelle jeweils dem Zeitpunkt zuordnen, zu dem die jeweilige Winkelgeschwindigkeit aufgetreten bzw. gegeben oder angenommen ist. Dabei kann insbesondere vorgesehen sein, dass derartige Zuordnungspaare zeitlich beabstandet bereitgestellt werden. Ferner kann dabei vorgesehen sein, dass die Mediane den Schwerpunkt drei benachbarter Wertepaare angibt. Insbesondere kann vorgesehen sein, dass das mittlere solcher drei Wertepaare ein, insbesondere in einem ersten Schritt, ermitteltes lokales Extremum, wie lokales Maximum, solcher Wertepaare ist. Hierbei kann auch vorgesehen sein, dass der zeitliche Abstand, in dem diese Wertepaare bereitgestellt werden, im Wesentlichen gleich ist. Dieser zeitliche Abstand kann beispielsweise der Interruptzeit $T_{Int}$ entsprechen und, um ein Beispiel zu nennen, 2,5 ms oder 5 ms oder 10 ms sein. Es kommen allerdings auch andere Zeitabstände in Betracht. So kann beispielsweise in einem besonders bevorzugten Ausführungsbeispiel, in dem drei im Zeitabstand von $T_{Int}$ bereitgestellte Wertepaare der Winkelgeschwindigkeit der Getriebeeingangsdrehzahl und den jeweiligen Zeitpunkten die Mediane wie folgt berechnet werden:

$$Mediane = t_{max} + (\omega_{i+1} - \omega_{i-1}) * T_{Interupt} / (\omega_{i-1} + \omega_i + \omega_{i+1}),$$

wobei $\omega_{i-1}$, $\omega_i$, und $\omega_{i+1}$ in der durch ihre Indices angegebenen Reihenfolge gemessen oder ermittelt wurden und wobei $\omega_i$ der größte dieser drei Messwerte ist; wobei ferner jeweils zwei benachbarten der drei Messwerte im zeitlichen Abstand von $T_{Interupt}$ bereitgestellt wurden und wobei $\omega_i$ der Zeitpunkt $t_{max}$ zugeordnet ist.

Ein weiterer Kennwert kann ein Zeitpunkt $t_{max}$ sein, der gegeben ist bzw. angenommen wird, wenn ein lokales Extremum, wie ein lokales Maximum, bezogen auf zeitlich beabstandet bereitgestellte Drehzahl- bzw. Winkelgeschwindigkeitssignale der Getriebeeingangswelle - bezogen auf den ersten Schritt - gegeben ist. Diese zeitlich beabstandeten Drehzahl- bzw. Winkelgeschwindigkeitssignale bzw. die Zuordnung dieser zu den Zeitpunkten, zu denen sie gegeben sind, kann insbesondere in einem ersten Schritt ermittelt sein.

Ein weiterer beispielhafter Kennwert ist ein lokales Extremum, wie lokales Maximum ($\omega_{max}$), welches auf zeitlich beabstandet bereitgestellte Drehzahl- bzw. Winkelgeschwindigkeitssignale der Getriebeeingangswelle bezogen ist. In der obigen Formel zur Mediane kann dieses $\omega_{max}$ bevorzugt dem $\omega_i$ entsprechen. $\omega_{max}$ bzw. $\omega_i$ kann bevorzugt im ersten Schritt ermittelt worden sein.

Ein weiterer beispielhafter Kennwert ist die Amplitude (A) der Rupfschwingung. Dies ist insbesondere die letzte festgestellte Amplitude der Rupfschwingung bzw. das letzte festgestellte lokale Maximum. Dabei ist die Amplitude der Rupfschwingung insbesondere bezogen auf die reine schwingende Bewegung.

Ein weiterer beispielhafter Kennwert ist die Frequenz $f_{Rupfen}$ der Rupfschwingung bzw. $\omega_{Rupfen}$, wobei der Zusammenhang gilt:

$$\omega_{Rupfen} = 2 \, * \, \pi \, * \, f_{Rupfen}.$$

Ein weiterer beispielhafter Kennwert, der in einer bevorzugten Gestaltung zur Ermittlung der Abweichung allein oder in Verbindung mit anderen Kennwerten verwendet werden kann, ist die gesamte (durchschnittliche) Steigung der Winkelgeschwindigkeit der Getriebeeingangswelle (B). Diese Steigung (B) ist insbesondere die Steigung der Winkelgeschwindigkeit, die unabhängig von (überlagerten) Schwingungen durchschnittlich gegeben ist. Beispielsweise kann es sich hierbei um die Steigung eines Anstiegs der Winkelgeschwindigkeit der Getriebeeingangsdrehzahl handeln, die unabhängig vom Rupfen gegeben ist bzw. ebenfalls gegeben wäre, wenn kein Rupfen gegeben wäre.

Ein weiterer beispielhafter Kennwert, der bei der Ermittlung der Abweichung berücksichtigt werden kann, ist der Winkel zwischen zwei Zähnen eines Weggebers ($\varphi_{Puls}$) Ein solcher Winkel $\varphi_{Puls}$ ist allerdings nur dann gegeben, wenn ein entsprechender Weggeber verwendet wird. Ein solcher beispielhafter Weggeber hat beabstandete Zähne, zwischen denen sich Zwischenräume befinden. Der Winkel zwischen zwei Zähnen ist dabei insbesondere der Winkel, der zwischen zwei Begrenzungsflächen benachbarter Zähne gegeben ist, die jeweils in Drehrichtung oder in Gegendrehrichtung gelegen sind.

Besonders bevorzugt ist vorgesehen, dass die Abweichung bzw. die Abweichung der zeitlichen Lage des in einem ersten Schritt ermittelten lokalen Extremums der von der tatsächlichen bzw. angenäherten Lage des lokalen Extremums anhand des folgenden Zusammenhangs ermittelt wird:

$$\Delta t = t_{Dach} - t_{max} \approx -0{,}5 \, * \, T_{int} - 0{,}5 \, * \, (Mediane - t_{max}) \, * \, [-3 \, * \, \omega_{max} / (A \, * \, \omega_{Rupfen}^2 \, * \, T_{int}^2 + 5 / 4] - B / (A \, * \, \omega_{Rupfen}^2) - \varphi_{Puls} / (2 \, * \, \omega_{max})$$

Vorzugsweise wird annähernd davon ausgegangen, dass $d^2\omega/dt$ im Wesentlichen - $A \, * \, \omega_{Rupfen}$ entspricht.

In einer bevorzugten Gestaltung ist vorgesehen, dass eine Abweichung ermittelt wird, und mittels dieser ermittelten Abweichung die Phasenlage eines tatsächliches Extremums, insbesondere ein tatsächliches Maximum, der Winkelgeschwindigkeit oder Drehzahl der Getriebeeingangsdrehzahl ermittelt bzw. angenähert wird. Es kann auch vorgesehen sein, dass die tatsächliche Phase der Winkelgeschwindigkeit bzw. der Drehzahl der Getriebeeingangswelle einer Schwingung, die auf ein Rupfen zurückzuführen ist, ermittelt bzw. angenähert wird.

Die Ermittlung der Phase wird bevorzugt anhand von Extrema, insbesondere anhand von Maxima, vorgenommen. So kann die Ermittlung der Phasenlage beispielsweise anhand der zeitlichen Position eines Maximums vorgenommen werden.

In einer bevorzugten Gestaltung ist vorgesehen, dass in einem ersten Schritt eine Phasenlage ermittelt wird. Dies kann insbesondere die Phasenlage der Winkelgeschwindigkeit der Getriebeeingangsdrehzahl sein. Diese ermittelte Phasenlage wird nach dieser bevorzugten Ausführungsform der Erfindung zunächst für die Modulation eines Kupplungssollwegs herangezogen. Dies bedeutet insbesondere, dass die Phasenlage des modulierten Kupplungssollwegs so gewählt wird, wie die Phasenlage der Getriebeeingangsdrehzahl, die im ersten Schritt ermittelt wurde.

In einer bevorzugten Gestaltung wird eine Korrektur der in einem ersten Schritt ermittelten Phasenlage der Winkelgeschwindigkeit der Getriebeeingangsdrehzahl bzw. Getriebeeingangswelle vorgenommen. Es sei angemerkt, dass die Winkelgeschwindigkeit bzw. Phasenlage der Getriebeeingangsdrehzahl bzw. Getriebeeingangswelle insbesondere bezogen ist auf den der Größe nach erfassten bzw. ermittelten Wert. Diese Angaben beziehen sich insbesondere auf die Zeitwegkurve der Getriebeeingangsdrehzahl bzw. der Winkelgeschwindigkeit. Dies bedeutet, dass der zeitliche Verlauf der Größe dieser Signale insbesondere Berücksichtigung findet bei der Bestimmung der Phasenlage und weniger die Frage, welche Drehlage die Welle in Bezug auf ihre Achse aufweist.

In einer bevorzugten Gestaltung ist vorgesehen, dass in einem zweiten Schritt eine Abweichung ermittelt wird, die zwischen der im ersten Schritt ermittelten Phasenlage und der tatsächlichen Phasenlage, oder umgekehrt, gegeben ist. Bevorzugt ist vorgesehen, dass anhand dieser Abweichung und / oder der im zweiten Schritt ermittelten die tatsächliche Phasenlage der Getriebeeingangsdrehzahl bzw. Winkelgeschwindigkeit der Getriebeeingangswelle zur Modulation des Kupplungssollweges verwendet wird. In einer bevorzugten Gestaltung ist vorgesehen, dass diese Abweichung so verwendet wird, dass die Phasenlage und / oder Periodendauer des Kupplungssollweges verändert wird.

Besonders bevorzugt wird die Periodendauer des Kupplungssollweges um die festgestellte Abweichung verändert. Dies kann insbesondere so sein, dass diese Veränderung innerhalb einer Periode vorgenommen wird bzw. dass einmalig die Periodendauer des modulierten Kupplungssollweges um die festgestellte Abweichung verändert wird, um anschließend im Wesentlichen eine Übereinstimmung zwischen der tatsächlichen Phasenlage der Drehzahl bzw. Winkelgeschwindigkeit der Getriebeeingangswelle und den modulierten Kupplungssollweg zu erreichen.

Es kann auch vorgesehen sein, dass beispielsweise die Periodendauer des modulierten Kupplungssollweges über mehrere Perioden schrittweise so verändert wird, dass nach mehreren Perioden eine Übereinstimmung hinsichtlich der Phasenlage gegeben ist.

Bevorzugt ist ferner, dass der Kupplungssollweg und / oder das von der Kupplungseinrichtung übertragbare Drehmoment in Abhängigkeit des ermittelten lokalen Extremums, insbesondere lokalen Maximums, und / oder einer ermittelten Abweichung moduliert wird, um Rupfschwingungen entgegenzuwirken. Besonders bevorzugt ist, dass die Amplitude des Kupplungssollweges in von Abhängigkeit an tatsächliche Amplituden angenäherter bzw. angepasster Werte eingestellt bzw. verändert wird.

Die Aufgabe wird ferner gelöst durch ein Verfahren, wobei ermittelt wird, ob in einem Kraftfahrzeug-Antriebsstrang Rupfschwingungen gegeben sind, und wobei ermittelten Rupfschwingungen durch eine Veränderung der Stellung einer Einrichtung entgegengewirkt wird, wobei ferner durch eine Veränderung der Stellung dieser Einrichtung ein Drehkennwert eines Antriebsstrangbauteils veränderbar ist und wobei diese Stellungsveränderung in Abhängigkeit einer vorbestimmten, insbesondere zeitlichen, Funktion vorgegeben wird, welche eine Rampenfunktion aufweist.

Erfindungsgemäß ist insbesondere vorgesehen, dass ermittelt wird, ob in einem Kraftfahrzeug-Antriebsstrang Rupfschwingungen gegeben sind. Wenn Rupfschwingungen ermittelt werden, wird durch eine Veränderung der Stellung einer Einrichtungen diesen Rupfschwingungen entgegengewirkt. Eine solche Einrichtung ist eine solche, durch deren Stellungsänderung ein Drehkennwert eines Antriebsstrangbauteils direkt oder indirekt veränderbar oder beeinflussbar ist. Es sei angemerkt, dass eine solche Stellungsveränderung unmittelbar den Rupfschwingungen entgegenwirken kann oder auch nicht. Es kann beispielsweise auch vorgesehen sein, dass die Einrichtung verändert wird und anschließend überprüft wird, ob sich die Rupfschwingungen verändert haben oder sie beseitigt wurden.

Die Einrichtung, durch deren Stellungsveränderung Rupfschwingungen entgegengewirkt werden soll, kann insbesondere eine Kupplungseinrichtung sein, die in dem Antriebsstrang eines Kraftfahrzeugs angeordnet ist. Eine solche Kupplungseinrichtung kann insbesondere eine Anfahrkupplung sein.

Erfindungsgemäß ist insbesondere vorgesehen, dass die Stellungsveränderung der Einrichtung - bzw. in der bevorzugten Gestaltung der Kupplungseinrichtung - in Abhängigkeit einer vorbestimmten Funktion bestimmt bzw. vorgegeben wird. Diese Funktion weist eine Rampenfunktion auf. Die Funktion ist insbesondere eine zeitliche Funktion.

Die Aufgabe wird insbesondere durch ein Verfahren gelöst, wobei ermittelt wird, ob in einem Kraftfahrzeug-Antriebsstrang Rupfschwingungen gegeben sind, und wobei Rupfschwingungen durch eine Veränderung der Stellung einer Einrichtung entgegengewirkt wird, wobei ferner durch eine Veränderung der Stellung dieser Einrichtung ein Drehkennwert eines Antriebsstrangbauteils veränderbar ist, und wobei den Rupfschwingungen in ersten Zeitabschnitten durch die Veränderung der Stellung der Einrichtung entgegengewirkt wird und in zweiten Zeitabschnitten die Veränderung der Stellung der Einrichtung unterbrochen wird, so dass das System in diesen zweiten Zeitabschnitten frei schwingen kann.

Erfindungsgemäß ist insbesondere vorgesehen, dass Rupfschwingungen, die im Bereich eines Antriebsstrangs eines Kraftfahrzeugs gegeben sind, in ersten Zeitabschnitten mittels einer Veränderung der Stellung einer Einrichtung entgegengewirkt wird, und in zweiten Zeitabschnitten die Veränderung der Stellung dieser Einrichtung unterbrochen wird, so dass das System in diesen zweiten Zeitabschnitten frei schwingen kann.

Es sei allerdings angemerkt, dass in diesen zweiten Zeitabschnitten gegebenenfalls aus anderen Gründen, die unabhängig von einem Entgegenwirken gegen die Rupfschwingungen sind, die Stellung der Einrichtung verändert wird.

Die Einrichtung ist vorzugsweise eine Kupplungseinrichtung, wobei die Stellung dieser Kupplungseinrichtung besonders bevorzugt so verändert wird, dass das von der Kupplungseinrichtung übertragbare Drehmoment verändert, insbesondere moduliert, wird. Es kann auch vorgesehen sein, dass der Kupplungsweg dieser Kupplungseinrichtung verändert oder moduliert wird.

Eine solche Modulation kann beispielsweise schwingungsförmig und insbesondere sinusförmig gestaltet sein. Auch andere Modulationen sind bevorzugt.

In den ersten Zeitabschnitten wird vorzugsweise die Veränderung so vorgenommen, dass zumindest versucht wird, diesen Rupfschwingungen entgegenzuwirken. Dies bedeutet insbesondere, dass zumindest Maßnahmen eingeleitet werden, die, gegebenenfalls im Zusammenwirken mit anderen Maßnahmen, die Eignung haben könnten, den Rupfschwingungen entgegenzuwirken. Besonders bevorzugt ist vorgesehen, dass gezielt den Rupfschwingungen entgegengewirkt wird, so dass mit einer gewissen Wahrscheinlichkeit oder mit Sicherheit gesagt werden kann, dass die Rupfschwingungen vermindert oder abgebaut werden.

In einer bevorzugten Gestaltung weist die Rampenfunktion einen Abschnitt auf, in dem die Rampe von einem Ausgangswert auf einen Wert hochgefahren wird, sowie einen zeitlich später gelegenen Abschnitt, in dem die Rampe von diesem Wert auf einen Endwert wieder heruntergefahren wird. Es kann vorgesehen sein, dass die Rampe unmittelbar von dem Wert wieder heruntergefahren wird. Bevorzugt ist ferner, dass die Rampe zwischenzeitlich auf diesem Wert gehalten wird, ehe sie von diesem Wert wieder heruntergefahren wird.

Dieser Wert kann beispielsweise gleich "eins" sein. Er kann auch ein anderer Wert sein.

Der Ausgangswert und der Endwert sind vorzugsweise jeweils gleich "null". Diese Werte können allerdings auch verschieden sein oder einen anderen, gleichen Wert aufweisen.

In einer bevorzugten Gestaltung wird der modulierte Kupplungsweg in Abhängigkeit eines Ausregelfaktors bestimmt. Dieser kann beispielsweise eine Ausregelkonstante sein.

Der Ausregelfaktor bzw. die Ausregelkonstante kann insbesondere eine Konstante sein, die die Rückwirkung eines Reglers bestimmt.

Bevorzugt wird insbesondere ein selbsterregtes Rupfen ausgeregelt.

Ferner ist bevorzugt, dass ein selbsterregtes Rupfen mittels einer sinusförmigen Modulation des Kupplungssollweges ausgeregelt wird, die in einem Reglerinterrupt vorgegeben wird.

Es kann beispielsweise vorgesehen sein, dass die Phase und Periode solcher Modulation aus gefundenen Maxima der Getriebeeingangsdrehzahl oder der Rupfschwingung definiert wird.

Ferner kann beispielsweise vorgesehen sein, dass die Amplitude proportional der Rupfamplitude der Getriebeeingangsdrehzahl vorgegeben wird. Eine solche Amplitude kann beispielsweise aus dem Vergleich zwischen einer gefilterten und einer ungefilterten Getriebeeingangsdrehzahl definiert werden. Die gefilterte Getriebeeingangsdrehzahl ist aber insbesondere der schwingende Anteil der Getriebeeingangsdrehzahl bei Vorhandensein eine Rupfschwingung.

Vorzugsweise ist vorgesehen, dass der Kupplungsweg zur Verminderung oder Beseitigung von Rupfschwingungen moduliert wird und dieser modulierte Kupplungsweg in Abhängigkeit einer Amplitude der Rupfschwingung bestimmt wird. Dies kann insbesondere eine Amplitude der Rupfschwingung sein, die als letzte aufgefunden wurde. Es sei angemerkt, dass der Kupplungsweg insbesondere der Kupplungssollweg sein kann.

Der modulierte Kupplungsweg kann beispielsweise in Abhängigkeit einer Sinusfunktion bestimmt werden. Eine solche Sinusfunktion kann grundsätzlich beliebiger Art sein. Besonders bevorzugt ist vorgesehen, dass eine solche Sinusfunktion von der Frequenz des Rupfens und / oder von der Zeit und / oder von einer ermittelten Phasenverschiebung zwischen der Rupfschwingung und dem Verlauf der Wegmodulation, insbesondere Verlauf der Istwegmodulation, abhängt.

Es kann auch vorgesehen sein, dass der modulierte Kupplungsweg in Abhängigkeit einer Amplitude der Rupfschwingung und / oder in Abhängigkeit einer Sinusfunktion bestimmt wird, wobei die Amplitude beim Nulldurchgang der Sinusfunktion aktualisiert wird. Eine solche Aktualisierung kann insbesondere in Abhängigkeit und unter Berücksichtigung der Getriebeeingangsdrehzahl vorgenommen werden. Dabei kann insbesondere vorgesehen sein, dass die Sinusfunktion eine Sinusfunktion ist, die von der Getriebeeingangsdrehzahl bzw. der Rupffrequenz abhängt.

Vorzugsweise ist vorgesehen, dass die Veränderung der Stellung einer Einrichtung, also insbesondere die Veränderung einer Kupplungseinrichtung bzw. einer Kupplungswegmodulation oder eine Modulation des von der Kupplung übertragbaren Drehmoments in ersten Zeitabschnitten vorgenommen wird und in zweiten Zeitabschnitten eine solche Veränderung bzw. Modulation ausbleibt. Es sei allerdings angemerkt, dass diese Veränderung bzw. Modulation insbesondere eine solche ist, die durchgeführt wird, um Rupfschwingungen entgegenzuwirken. Dies bedeutet also, dass grundsätzlich das von der Kupplung übertragbare Drehmoment aufgrund anderer Steuerungsvorgänge oder dergleichen gegebenenfalls in zweiten Zeitabschnitten verändert werden kann. Vorzugsweise wechseln sich die ersten und zweiten Zeitabschnitte ab, wenn festgestellt wird, dass Rupfschwingungen gegeben sind. Es kann auch vorgesehen sein, dass dieses Abwechseln zwischen einer Kupplungswegmodulation in ersten Zeitabschnitten und einer ausbleibenden Kupplungswegmodulation in zweiten Zeitabschnitten so lange durchgeführt wird, bis festgestellt wird, dass die Amplitude der Rupfschwingungen kleiner als eine vorbestimmte Ausschaltschwelle ist. Diese Ausschaltschwelle kann auch "null" sein.

In einer bevorzugten Gestaltung ist die Dauer der ersten Zeitabschnitte im Bereich von einer bis fünf Rupfenperioden. Die ersten Zeitabschnitte können allerdings auch eine andere Dauer haben. In einer besonders bevorzugten Gestaltung ist vorgesehen, dass die erste Zeitperiode eine Dauer von zwei bis drei Rupfenperioden aufweist.

Die Dauer der ersten Zeitabschnitte kann allerdings auch anders sein.

Es kann beispielsweise vorgesehen sein, dass innerhalb des ersten Zeitabschnitts eine Kupplungswegmodulation mit konstanter Phase durchgeführt wird. Die Phase bezieht sich hierbei insbesondere auf die Phasenverschiebung, die zwischen der Kupplungswegmodulation und der Rupfschwingung gegeben ist.

In einer bevorzugten Gestaltung ist vorgesehen, dass die Phase bzw. Phasenverschiebung in zweiten Zeitabschnitten, während denen das System frei schwingt, neu bestimmt wird und die Modulation anschließend in einem ersten Zeitabschnitt mit einer neuen Phase $\varphi_{aktuell}$ bzw. eine neuen Phasenverschiebung wiederholt durchgeführt wird.

Hierbei ist insbesondere vorgesehen, dass der modulierte Kupplungsweg von der Phase bzw. Phasenverschiebung abhängt.

In einer bevorzugten Gestaltung ist vorgesehen, dass die Rampe trapezförmig gestaltet ist.

Die Rampe kann allerdings auch anders gestaltet sein. Insbesondere kann das Hochfahren der Rampe und das Herunterfahren der Rampe einen nicht linearen Bereich aufweisen. Auch zwischen dem Hoch- und Herunterfahren kann ein nicht linearer Bereich der Rampe gegeben sein.

In einer bevorzugten Gestaltung wird, insbesondere in ersten Zeitabschnitten, die Kupplungswegmodulation wie folgt bestimmt:

$$\text{Weg}_{mod} = (\text{Rampe\_hoch, 1, Rampe\_runter}) * k_{ausreg} * A_{aktuell} * \sin(\omega_{rupfen} * t + \varphi_{aktuell}),$$

wobei $\text{Weg}_{mod}$ der modulierte Kupplungsweg ist, "(Rampe hoch, 1, Rampe runter)" eine beispielhafte Rampenfunktion ist, $k_{ausreg}$ eine Ausregelkonstante ist, $A_{aktuell}$ die momentan verwendete Amplitude der Rupfschwingung bzw. die Differenz aus der (ungefilterten) Getriebeeingangsdrehzahl und der gefilterten Getriebeeingangsdrehzahl ist, wobei sich dies insbesondere auf die beobachteten bzw. erfassten Getriebeeingangsdrehzahlen bezieht, $\omega_{rupfen}$ das $2*\pi$-fache der Rupffrequenz ist, t die Zeit ist und $\varphi_{aktuell}$ die momentan zur Bestimmung der Momentenmodulation verwendete Phasenverschiebung zwischen der Kupplungswegmodulation und der Rupfschwingung ist.

Die Aufgabe wird ferner insbesondere durch ein Verfahren gelöst, wobei ermittelt wird, ob in einem Kraftfahrzeug-Antriebsstrang Rupfschwingungen gegeben sind und wobei in diesem Antriebsstrang eine Kupplungseinrichtung angeordnet ist, welche in einem Schlupfbetrieb betrieben werden kann, und wobei ermittelten Rupfschwingungen durch eine Modulation des von der Kupplungseinrichtung übertragbaren Drehmoments und / oder des Kupplungswegs entgegengewirkt wird, und wobei diese Modulation so ist, dass ein moduliertes Kupplungssollmoment angesteuert wird, welches als Differenz aus dem unmodulierten Kupplungsmoment und einem Produkt bestimmt wird, wobei ferner dieses Produkt einen ersten Faktor aufweist, der von der Winkelgeschwindigkeit einer Kupplungsscheibe und / oder von der Winkelgeschwindigkeit einer Getriebeeingangswelle und / oder von der Winkelgeschwindigkeit eines Rades des Kraftfahrzeugs und / oder von einer Übersetzung abhängt, die einem Gang zugeordnet ist, der in einer im Antriebsstrang angeordneten Getriebeeinrichtung geschaltet ist, und wobei dieses Produkt einen zweiten Faktor aufweist, der eine Ausregelkonstante ist, wobei ferner diese Ausregelkonstante von Kennwerten des schwingenden Antriebstrangsystems abhängt und / oder von Kennwerten, die die Reibcharakteristik der Kupplungseinrichtung beschreiben oder zumindest mitbeschreiben.

Erfindungsgemäß ist insbesondere vorgesehen, dass ermittelt bzw. festgestellt wird, ob in einem Kraftfahrzeugantriebsstrang Rupfschwingungen gegeben sind. In diesem Kraftfahrzeugantriebsstrang ist eine Kupplungseinrichtung, wie Anfahrkupplung, vorgesehen, die in einem Schlupfbetrieb betrieben werden kann bzw. in einem Schlupfbetrieb betrieben werden kann. Wenn Rupfschwingungen ermittelt oder festgestellt werden, wird diesen durch eine Modulation des von der Kupplungseinrichtung übertragbaren Drehmoments und / oder des Kupplungswegs entgegengewirkt. Diese Modulation kann insbesondere so sein, dass ein moduliertes Kupplungssollmoment angesteuert wird bzw. angesteuerten Kupplungssollmoment ein moduliertes Kupplungssollmoment überlagert wird. Diese Modulation des Kupplungssollmoments wird vorzugsweise als Differenz aus dem unmodulierten Kupplungsmoment und einem Produkt bestimmt. Dieses Produkt ist vorzugsweise so, dass es einen ersten Faktor aufweist, der von der Winkelgeschwindigkeit und / oder Drehzahl einer Kupplungsscheibe der Kupplungseinrichtung und / oder von der Winkelgeschwindigkeit oder Drehzahl einer Getriebeeingangswelle und / oder von der Winkelgeschwindigkeit und / oder Drehzahl eines Rades des Kraftfahrzeugs und / oder von einer geschalteten Übersetzung einer im Antriebsstrang angeordneten Kupplungseinrichtung abhängt. Bevorzugt ist ferner vorgesehen, dass dieses Produkt einen zweiten Faktor aufweist, der eine Ausregelkonstante ist. Die Ausregelkonstante hängt bei dieser Gestaltung vorzugsweise von Kennwerten des schwingenden Antriebsstrangsystems ab und / oder von Kennwerten, die die Reibcharakteristik der Kupplungseinrichtung beschreiben oder zumindest mitbeschreiben.

In einer bevorzugten Gestaltung wird das modulierte Kupplungsmoment anhand des folgenden Zusammenhanges bestimmt:

$$M_{Mod} = M - k * (\omega_{Kupplungsscheibe} / i_{Gang} - \omega_{Rad}),$$

wobei $M_{Mod}$ das modulierte Kupplungsmoment, M das unmodulierte Kupplungsmoment, k eine Ausregelkonstante, $\omega_{Kupplungsscheibe}$ die Winkelgeschwindigkeit der Kupplungsscheibe, $i_{Gang}$ eine dem geschalteten Gang zugeordneten Übersetzung und $\omega_{Rad}$ die Winkelgeschwindigkeit eines Rades des Kraftfahrzeugs ist.

Ein Zusammenhang, der die Reibcharakteristik der Kupplungseinrichtung beschreibt oder zumindest mitbeschreibt, bzw. entsprechende Kennwerte können beispielsweise wie folgt sein: Es kann vorgesehen sein, dass eine Funktion vorgesehen ist, die beschreibt, wie sich der Reibwert der Kupplungseinrichtung über den Schlupf der Kupplungseinrichtung ändert. Die Ausregelkonstante kann beispielsweise auch von der zeitlichen Ableitung eines solchen Zusammenhangs bzw. einer solchen Funktion abhängen.

Die Aufgabe wird ferner insbesondere durch ein Verfahren gelöst, wobei ermittelt wird, ob in einem Kraftfahrzeug-Antriebsstrang Rupfschwingungen gegeben sind und wobei in diesem Antriebsstrang eine Kupplungseinrichtung angeordnet ist, welche in einem Schlupfbetrieb betrieben werden kann, und wobei ermittelten Rupfschwingungen durch eine Modulation des von der Kupplungseinrichtung übertragbaren Drehmoments und / oder des Kupplungswegs entgegengewirkt wird, und wobei diese Modulation so ist, dass ein moduliertes Kupplungssollmoment angesteuert wird, welches als Differenz aus dem unmodulierten Kupplungsmoment und einem Produkt bestimmt wird, wobei ferner dieses Produkt einen ersten Faktor aufweist, der von der Winkelgeschwindigkeit einer Kupplungsscheibe und / oder von der Winkelgeschwindigkeit einer Getriebeeingangswelle und / oder von der Winkelgeschwindigkeit eines Rades des Kraftfahrzeugs und / oder von einer Übersetzung abhängt, die einem Gang zugeordnet ist, der in einer im Antriebsstrang angeordneten Getriebeeinrichtung geschaltet ist, und wobei dieses Produkt einen zweiten Faktor aufweist, der eine Ausregelkonstante ist, wobei ferner diese Ausregelkonstante vom Kupplungssollmoment und / oder von einem nominellen Kupplungsmoment, das unter der Annahme eines nominellen Reibwerts ermittelt wird, und / oder von einer Funktion eines gemittelten Schlupfes abhängt.

Erfindungsgemäß ist insbesondere vorgesehen, dass die Ausregelkonstante von einem nominellen Kupplungsmoment abhängt, das unter der Annahme eines nominellen Reibwerts ermittelt wird. Es kann auch vorgesehen sein, dass die Ausregelkonstante von einer Funktion des gemittelten Schlupfes der Kupplungseinrichtung abhängt, und insbesondere des gemittelten Schlupfes, der während einer Kupplungsmodulation auftritt.

In einer bevorzugten Gestaltung ist vorgesehen, dass für ein gegebenes Dekrement die auf das Rupfen bezogene Gesamtdämpfung des Systems bei der Modulation des Kupplungsmoments bzw. der Kupplungswegmodulation in Abhängigkeit der Ausregelkonstante so gewählt wird, dass dieses Dekrement dem halben Produkt aus der Gesamtdämpfung des Systems ($\alpha_{Gesamt}$) und der Rupfperiode ((T) entspricht. Dabei kann vorzugsweise vorgesehen sein, dass das Dekrement dem Logarithmus des Quotienten zweier aufeinanderfolgender Amplituden der Rupfschwingung entspricht. Diese aufeinanderfolgenden Amplituden sind insbesondere solche, die festgestellt wurden, und zwar beispielsweise anhand des Verlaufs der Getriebeeingangsdrehzahl. Diese Amplituden können insbesondere tatsächliche Amplituden sein und / oder solche, die in einem ersten Schritt ermittelt wurden. Es können auch gemäß einer anderen Charakteristik ermittelte, im Sinne dieser anderen Charakteristik aufeinanderfolgende Amplituden der Rupfschwingung sein.

Dieser Zusammenhang lässt sich ausdrücken als: $d = \ln(A_{i+1} / A_i)$, wobei d das Dekrement, $A_i$ eine Amplitude der Rupfschwingung und $A_{i+1}$ eine der Amplitude $A_i$ folgende Amplitude der Rupfschwingung ist.

Vorzugsweise ist das System so, dass sich für die Gesamtdämpfung des Systems unter Momentenmodulation der folgende Zusammenhang ergibt:

$$\alpha_{gesamt} = \alpha + [M_{nom\_0} * i * f'(S) + k * f(S)] / [f_{nom} * i * J_{KS}],$$

wobei $\alpha_{gesamt}$ die Gesamtdämpfung des Systems bei der Momenten- bzw. Kupplungswegmodulation ist; $\alpha$ ein Faktor ist; $M_{nom\_0}$ aus dem nominellen Reibwert $f_{nom}$ errechnetes Kupplungsmoment, insbesondere während der Anfahrt, ist; i die Übersetzung zwischen der Kupplungsscheibe und dem getriebenen Rad ist, die bei dem in der Getriebeeinrichtung geschalteten Gang gegeben ist; f(S) eine Funktion ist, die angibt, wie sich der Reibwert über dem Schlupf ändert; f'(S) die zeitliche Ableitung der Funktion f(S) ist; k eine Ausregelkonstante ist; $f_{rom}$ der nominelle Reibwert der Kupplungseinrichtung ist, der idealisiert als konstant angenommen ist, und zwar insbesondere als Reibwert, der bei geschlossener Kupplungseinrichtung gegeben ist; und $J_{KS}$ das Trägheitsmoment der Kupplungsscheibe ist.

Für den Faktor $\alpha$ gilt vorzugsweise der folgende Zusammenhang:

$$\alpha = b \,^* [1 / (i^2 \,^* J_{KS}) + (1 / J_{Fzg}),$$

wobei b die Dämpfung des Systems und $J_{Fzg}$ das Trägheitsmoment des Kraftfahrzeuges ist.

In einer besonders bevorzugten Gestaltung gilt für den Faktor bzw. die Ausregelkonstante k der folgende Zusammenhang:

$$k = [(2 \,^* d / T - \alpha) \,^* f_{nom} \,^* J_{KS} - M_{nom\_0} \,^* f'(S)] / f(S)$$

Bevorzugt ist ferner, dass die Ausregelkonstante k von der Periode T der Rupfschwingung und / oder vom Trägheitsmoment einer Kupplungsscheibe und / oder des Getriebeeingangs abhängt.

Ferner ist gemäß einer bevorzugten Gestaltung vorgesehen, dass die Ausregelkonstante von einem nominellen Reibwert der Kupplungseinrichtung abhängt.

Die Ausregelkonstante kann in einer bevorzugten Gestaltung von einem Quotienten zweier zeitlich aufeinanderfolgender Amplituden der Rupfschwingung abhängen. Dies können Amplituden sein, die feststellbar sind oder solche, die festgestellt wurden oder solche, die gemäß einer vorbestimmten Charakteristik ermittelt wurden. Insbesondere kann auch vorgesehen sein, dass die Ausregelkonstante k vom Logarithmus zweier solcher zeitlich aufeinanderfolgender Amplituden der Rupfschwingung abhängt.

In einer besonders bevorzugten Gestaltung ist vorgesehen, dass eine als Faktor gegebene Rampe innerhalb von einer Periode der Rupfschwingung von ihrem Ausgangswert auf einen Wert bzw. Zielwert aufgebaut wird. Besonders bevorzugt ist vorgesehen, dass die Zeitperiode dieses Aufbaus in etwa einer Periode der Rupfschwingung entspricht. Es kann auch vorgesehen sein, dass es etwa eine Periode der Rupfschwingung dauert, bis der Ausregelfaktor k seinen angestrebten Wert aufweist.

Die Aufgabe wird ferner insbesondere durch ein Verfahren gelöst, wobei ermittelt wird, ob in einem Kraftfahrzeug-Antriebsstrang Rupfschwingungen gegeben sind und wobei in diesem Antriebsstrang eine Kupplungseinrichtung angeordnet ist, welche in einem Schlupfbetrieb betrieben werden kann, und wobei ermittelten Rupfschwingungen durch eine Modulation des von der Kupplungseinrichtung übertragbaren Drehmoments und / oder des Kupplungswegs entgegengewirkt wird, und wobei diese Modulation so ist, dass die Modulation in unterschiedlichen Abschnitten gemäß einer unterschiedlichen Charakteristik durchgeführt wird.

Erfindungsgemäß ist insbesondere vorgesehen, dass ermittelt bzw. festgestellt wird, ob bzw. dass in einem Kraftfahrzeugantriebsstrang Rupfschwingungen gegeben sind. In diesem Kraftfahrzeugantriebsstrang ist eine Kupplungseinrichtung, wie Anfahrkupplung, angeordnet, welche in einem Schlupfbetrieb betrieben werden kann bzw. in einen Schlupfbetrieb geschaltet werden kann. Wenn festgestellt bzw. ermittelt wird, dass Rupfschwingungen gegeben sind, wird das von der Kupplungseinrichtung übertragbare Drehmoment und / oder der Kupplungsweg moduliert, so dass den Rupfschwingungen entgegengewirkt wird. Dies bedeutet allerdings nicht, dass permanent bei vorhandenen Rupfschwingungen eine entsprechende Modulation durchgeführt werden muss.

Die Modulation ist gemäß dieser Gestaltung der Erfindung so, dass sie in unterschiedlichen Abschnitten gemäß einer unterschiedlichen Charakteristik durchgeführt wird.

Die Aufgabe wird ferner insbesondere durch ein Verfahren gelöst, wobei ermittelt wird, ob in einem Kraftfahrzeug-Antriebsstrang Rupfschwingungen gegeben sind und wobei in diesem Antriebsstrang eine Kupplungseinrichtung angeordnet ist, welche in einem Schlupfbetrieb betrieben werden kann, und wobei ermittelten Rupfschwingungen durch eine Modulation des von der Kupplungseinrichtung übertragbaren Drehmoments und / oder des Kupplungswegs entgegengewirkt wird, und wobei diese Modulation so ist, dass sie schwingungsartig gestaltet ist und eine erste Halbwelle (68, 82) sowie gegebenenfalls eine zweite Halbwelle (70, 84) aufweist, wobei die Amplitude (66, 86) der ersten Halbwelle größer als die Amplitude (88) der zweiten Halbwelle (70, 84) ist.

Erfindungsgemäß ist insbesondere vorgesehen, dass die Modulation des von der Kupplungseinrichtung übertragbaren Drehmoments bzw. des Kupplungswegs schwingungsartig gestaltet ist und eine erste Halbwelle sowie gegebenenfalls eine zweite Halbwelle aufweist. Die schwingungsartige Gestaltung kann grundsätzlich beliebiger Art sein. Besonders bevorzugt ist eine sinusschwingungsartige Gestaltung gegeben. Erfindungsgemäß ist insbesondere vorgesehen, dass die während einer Schwingungsperiode gegebene (Teil)Schwingung eine erste Halbwelle aufweist sowie gegebenenfalls eine zweite Halbwelle. Dabei ist insbesondere vorgesehen, dass die Amplitude der ersten Halbwelle größer als die Amplitude der zweiten Halbwelle ist, welche gegebenenfalls gleich "null" sein kann.

In einer bevorzugten Gestaltung wird die Modulation nach der zweiten Halbwelle unterbrochen oder beendet, also insbesondere, nachdem die Schwingung im Wesentlichen oder genau eine Periode durchlaufen hat. Es können aber auch andere, abweichende Werte für ein derartiges Unterbrechen oder Beenden vorgesehen sein.

Vorzugsweise wird nach dem Unterbrechen bzw. Beenden der Modulation bzw. der zweiten Halbwelle die Phase der Rupfschwingung ermittelt. Hierzu kann insbesondere vorgesehen sein, dass dieses Ermitteln der Phase anhand eines lokalen Extremums, wie lokales Maximum, der Rupfschwingung oder der Getriebeeingangsdrehzahl durchgeführt wird.

Es kann auch vorgesehen sein, dass die Amplitude der zweiten Halbwelle gleich "null" ist bzw. die zweite Halbwelle überhaupt nicht gegeben ist.

In einer besonders bevorzugten Gestaltung wird der Rupfschwingung durch genau eine Halbschwingung bzw. durch eine eine Halbwelle aufweisende Modulation entgegengewirkt, wobei anschließend die Modulation unterbrochen bzw. beendet wird.

In einer bevorzugten Gestaltung wird die Modulation des Kupplungswegs bzw. des von der Kupplung übertragbaren Moments mit einer Phasenverschiebung gegenüber der Rupfschwingung gestartet.

Es kann insbesondere vorgesehen sein, dass die Modulation gestartet wird, wenn ein lokales Extremum, wie lokales Maximum oder lokales Minimum, der Rupfschwingung festgestellt wurde. Besonders bevorzugt wird die Modulation dann unmittelbar gestartet.

Vorzugsweise ist die Modulation so gestaltet, dass zu Beginn und / oder am Ende der Modulation der zeitliche Verlauf der Modulation so ist, dass eine Tangente an diesem verlaufenden Anfangs- bzw. Endbereich im Wesentlichen parallel zur Zeitachse verläuft. Insbesondere kann auch vorgesehen sein, dass sich dieses auf den Beginn und das Ende einer Halbwelle bezieht.

Es kann aber auch vorgesehen sein, dass ein solcher insbesondere tangentialer Verlauf nicht gegeben ist.

Die Aufgabe wird ferner insbesondere durch ein Verfahren gelöst, wobei ermittelt wird, ob in einem Kraftfahrzeug-Antriebsstrang Rupfschwingungen gegeben sind und wobei in diesem Antriebsstrang eine Kupplungseinrichtung angeordnet ist, welche in einen Schlupfbetrieb betrieben werden kann, und wobei ermittelten Rupfschwingungen durch eine Modulation des von der Kupplungseinrichtung übertragbaren Drehmoments und / oder des Kupplungswegs entgegengewirkt wird, und wobei diese Modulation so ist, dass in Abhängigkeit der Rupfschwingung und / oder die Rupfschwingung beschreibender Kennwerte und / oder einer die Rupfschwingung beschreibender Funktion und in Abhängigkeit vorbestimmter Randbedingungen die Modulation bestimmt wird.

Erfindungsgemäß ist insbesondere vorgesehen, dass ermittelt und / oder festgestellt wird, dass bzw. ob in einem Kraftfahrzeugantriebsstrang Rupfschwingungen gegeben sind. In diesem Kraftfahrzeugantriebsstrang ist wenigstens eine Kupplungseinrichtung, die Anfahrkupplung, angeordnet, die in einem Schlupfbetrieb betrieben werden kann. Ferner ist erfindungsgemäß insbesondere vorgesehen, dass ermittelten bzw. festgestellten Rupfschwingungen durch eine Modulation des von der Kupplungseinrichtung übertragbaren Drehmoments bzw. des Kupplungswegs entgegengewirkt wird. Diese Modulation kann dabei so sein, dass in Abhängigkeit der Rupfschwingung und / oder in Abhängigkeit von Kennwerten, die die Rupfschwingung beschreiben, und / oder in Abhängigkeit einer Funktion, die die Rupfschwingung beschreibt bzw. mitbeschreibt, und in Abhängigkeit vorbestimmter Randbedingungen die Modulation bzw. der zeitliche Verlauf dieser Modulation bestimmt wird.

In einer bevorzugten Gestaltung ist vorgesehen, dass die Rupfschwingung in Abhängigkeit des Verdrehwinkels eines vorbestimmten Antriebsstrangabschnitts beschrieben wird.

Es kann auch vorgesehen sein, dass der Verlauf der Modulation in Abhängigkeit von Variablen vorgegeben wird und diese Variablen zumindest teilweise anhand von den Randbedingungen festgelegt werden.

Eine beispielhafte Randbedingung kann beispielsweise so sein, dass vorausgesetzt wird, dass der Verdrehwinkel zum Zeitpunkt "null" der Differenz aus dem Verdrehwinkel $\varphi_0$, der bei gegebenem Belastungsfall unter Außer-Acht-Lassung der Rupfschwingung gegeben wäre, und der Winkelamplitude $A_\varphi$ der Rupfschwingung entspricht.

Es kann beispielsweise auch eine Randbedingung so sein, dass die zeitliche Ableitung des Verdrehwinkels zum Zeitpunkt "null" gleich = "null" ist.

Eine weitere, alternative oder ergänzende Randbedingung kann so sein, dass der Verdrehwinkel $\varphi(T/2)$ zum Zeitpunkt der halben Periodendauer (T/2) der Rupfschwingung dem Verdrehwinkel $\varphi_0$ entspricht, der bei gegebenem Belastungsfall unter Außer-Acht-Lassung der Rupfschwingung gegeben wäre.

Es können auch andere Randbedingungen gegeben sein.

Ergänzend oder alternativ kann auch eine Randbedingung vorgesehen sein, die so ist, dass die zeitliche Ableitung des Verdrehwinkels zum Zeitpunkt der halben Periodendauer der Rupfschwingung gleich "null" ist. In einer bevorzugten Gestaltung entspricht die Periodendauer der Modulation des von der Kupplungseinrichtung übertragbaren Drehmoments und / oder des Kupplungswegs der halben Periodendauer der Rupfschwingung.

Besonders bevorzugt ist vorgesehen, dass das von der Kupplungseinrichtung übertragbare Drehmoment und / oder der Kupplungsweg entsprechend bzw. in Abhängigkeit einer Funktion moduliert wird, die die folgende Gestaltung

hat:

$$a^\star \sin(\omega^\star t),$$

wobei a ein Faktor ist. In einer bevorzugten Gestaltung wird dieser Faktor anhand vorbestimmter Randbedingungen bestimmt, die beispielsweise so sein können, wie sie bereits im Rahmen dieser Offenbarung erwähnt wurden.

Vorzugsweise gilt für den Faktor a, insbesondere unter Berücksichtigung der Randbedingungen, der Zusammenhang:

$$a = 2^\star \omega^2 A_\varphi / \pi,$$

wobei $A_\varphi$ die Amplitude des Verdrehwinkels gegenüber dem Verdrehwinkel $\varphi_0$ ist, der gegeben ist bzw. gegeben wäre, wenn keine Rupfschwingung gegeben wäre.

Besonders bevorzugt wird ein erfindungsgemäßes Verfahren im Schlupfbetrieb einer Kupplungseinrichtung eines Kraftfahrzeuges ausgeführt.

Ein der Erfindung nicht gehörendes elektronisches Steuergerät kann vorgesehen werden, das eine Speichereinrichtung aufweist sowie wenigstens ein Einrichtung zum Ausgeben und / oder Empfangen von Signalen aufweist, wobei in der Speichereinrichtung dieses Elektronischen Steuergeräts ein Datenverarbeitungsprogramm abgespeichert ist und wobei dieses Datenverarbeitungsprogramm ein Verfahren gemäß einem der vorangehenden Ansprüche steuert.

Das elektronische Steuergerät weist eine Speichereinrichtung auf sowie eine Einrichtung zum Ausgeben und / oder Empfangen von Signalen. Diese Einrichtung kann beispielsweise ein Anschluss für eine Drahtverbindung oder eine drahtlose Verbindung oder dergleichen sein. Das elektronische Steuergerät weist ferner eine Speichereinrichtung auf oder ist mit einer Speichereinrichtung verbunden. In dieser Speichereinrichtung ist ein Datenverarbeitungsprogramm abgespeichert, das ein Verfahren gemäß der vorliegenden Offenbarung ausführen kann.

Unter dem Begriff "Steuern" ist im Sinne der vorliegenden Erfindung insbesondere "Regeln" und / oder "Steuern" im Sinne der DIN zu verstehen. Entsprechendes gilt für von dem Begriff "Steuern" abgeleitete Begriffe.

Die Erfindung ist durch die technischen Merkmale des unabhängigen Verfahrensanspruchs 1 definiert; Weiterbildungen der Erfindung werden in den davon abhängigen Ansprüchen angegeben.

Im folgenden werden nun einige beispielhaft bzw. bevorzugte Aspekte der erfindungsgemäßen Gestaltungen anhand der Figuren erläutert, wodurch die Erfindung allerdings nicht beschränkt werden soll.

Dabei zeigt:

Fig. 1    die Schritte eines beispielhaften erfindungsgemäßen Verfahrens in schemati- scher Darstellung;

Fig. 2    die Schritte eines beispielhaften erfindungsgemäßen Verfahrens in schemati- scher Darstellung;

Fig. 3    einen ausschnittsweisen, beispielhaften zeitlichen Verlauf der Drehgeschwindig- keit einer Getriebeeingangswelle;

Fig. 4    ausschnittsweise, beispielhafte zeitliche Verläufe der Drehgeschwindigkeit einer Getriebeeingangswelle sowie eines modulierten Kupplungsistweges;

Fig.5    die Schritte eines beispielhaften erfindungsgemäßen Verfahrens in schemati- scher Darstellung;

Fig. 6    die Schritte eines beispielhaften erfindungsgemäßen Verfahrens in schemati- scher Darstellung;

Fig. 7    Verläufe eines von einer Kupplungseinrichtung übertragbaren Drehmoments über der Zeit sowie des Verdrehwinkels eines Antriebsstrangabschnitts über der Zeit;

Fig.8    einen beispielhaften Verlauf einer Kupplungswegmodulation bzw. einer Kupplungsmomentenmodulation; und

Fig.9    einen beispielhaften Verlauf einer Kupplungswegmodulation bzw. einer Kupplungsmomentenmodulation.

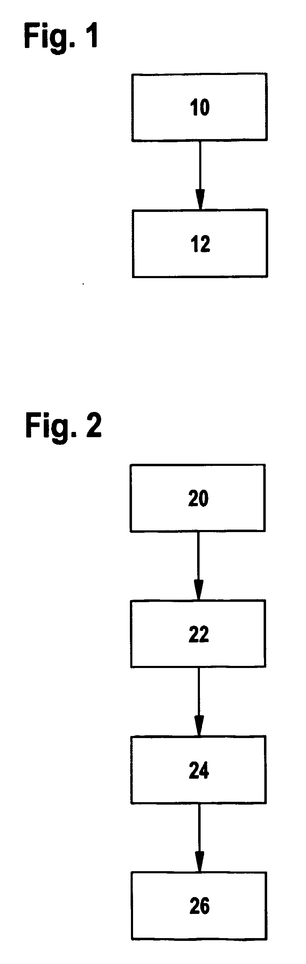

Fig. 1 zeigt ein beispielhaftes erfindungsgemäßes Verfahren in schematischer Darstellung.

In Schritt 10 wird ermittelt, ob Rupfschwingungen in einem Antriebsstrang eines Kraftfahrzeugs gegeben sind, bzw. festgestellt, dass solche gegeben sind.

Sofern derartige Rupfschwingungen gegeben sind, wird im Schritt 12 eine Einrichtung verstellt, um diesen Rupfschwingungen entgegenzuwirken. Diese Einrichtung ist insbesondere eine Kupplungseinrichtung eines Kraftfahrzeuges, wie Anfahrkupplung. Das Entgegenwirken kann beispielsweise so sein, dass, in dem Falle, dass die Einrichtung eine Anfahrkupplung eines Kraftfahrzeugs ist, der Kupplungsweg bzw. das von der Kupplungseinrichtung übertragbare Drehmoment moduliert wird. Eine solche Modulation kann insbesondere schwingungsförmig sein. Es kann beispielsweise auch vorgesehen sein, dass die Modulation sinusförmig gestaltet ist.

Fig. 2 zeigt die Schritte eines beispielhaften, erfindungsgemäßen Verfahrens in schematischer Darstellung.

Im Schritt 20 wird in unterschiedlichen Auswerteinterrupten jeweils ein Wert für die Drehgeschwindigkeit $\omega$ der Getriebeeingangsdrehzahl ermittelt und diesem ein jeweiliger Zeitpunkt zugeordnet.

In Schritt 22 wird ein zuletzt aufgetretenes Maximum dieser Drehgeschwindigkeitswerte $\omega$ der Getriebeeingangsdrehzahl ermittelt.

Es kann vorgesehen sein, dass anhand dieses Maximums bzw. dessen zeitlicher Lage die Phase eines modulierten Kupplungsmoments bzw. eines modulierten Kupplungswegs festgelegt und das Sollkupplungsmoment bzw. der Kupplungssollweg entsprechend moduliert wird.

Im Schritt 24 wird ermittelt, welcher Zeitabstand zwischen dem letzten, gefundenen lokalen Maximum der Getriebeeingangsdrehzahl und einem tatsächlichen Maximum der Getriebeeingangsdrehzahl bzw. der Rupfschwingungsdrehzahl gegeben ist. Dies kann insbesondere so sein, dass der Zeitabstand zwischen der dem letzten, gefundenen lokalen Maximum der Getriebeeingangsdrehzahl und einem lokalen Maximum des Ist-Kupplungswegs oder des Ist-Kupplungsmoments bestimmt wird. Auch andere Möglichkeiten der Bestimmung dieser Abweichung können verwendet werden.

In Schritt 26 wird die Kupplungswegmodulation, die durchgeführt wird, um Rupfschwingungen im Antriebsstrang entgegenzuwirken, verändert. Hierzu wird eine Periode der modulierten Wegvorgabe so festgesetzt, dass sie der alten Periode der Wegvorgabe entspricht, die um die im Schritt 24 ermittelte Abweichung reduziert ist. Diese neue Periode wird für einen Schwingungsdurchlauf als Periode benutzt. Anschließend wird die alte Periode wieder zur Kupplungswegmodulation verwendet.

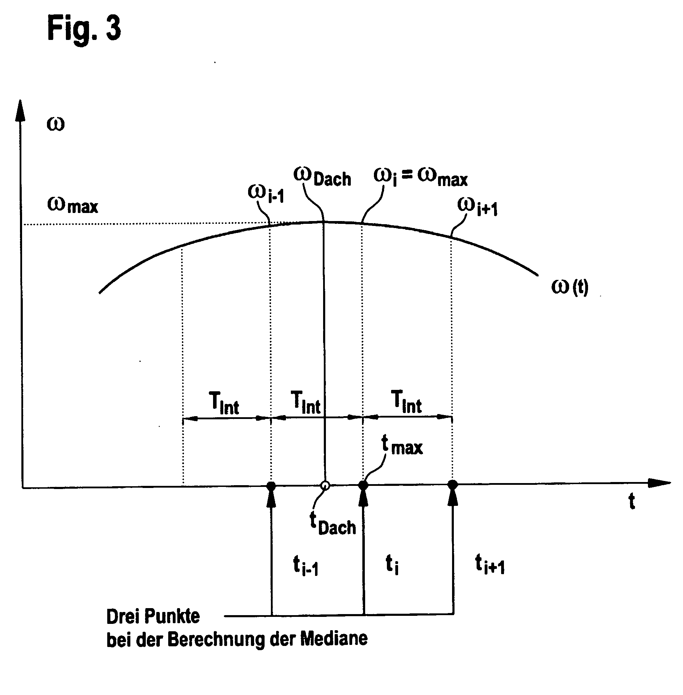

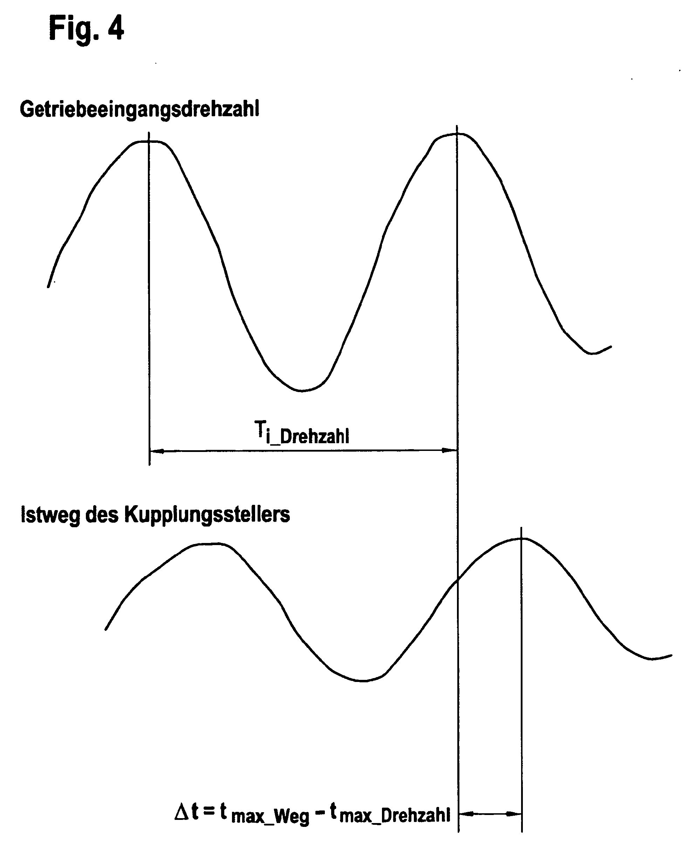

Anhand der Figuren 3 und 4 sollen die Schritte eines beispielhaften erfindungsgemäßen Verfahrens erläutert werden.

In Fig. 3 ist ein beispielhafter, tatsächlicher zeitlicher Verlauf einer schwingenden Getriebeeingangsdrehzahl bzw. Dreh- bzw. Winkelgeschwindigkeit $\omega(t)$ über der Zeit gezeigt (Bezugszeichen 30).

In mehreren (hier drei) aufeinanderfolgenden Zeitinterrupten $T_{Int}$ wird jeweils die Drehgeschwindigkeit $\omega(t)$ ausgewertet. Die hierbei ermittelten Drehgeschwindigkeitswerte, $\omega_{i-1}$, $\omega_i = \omega_{Max}$ und $\omega_{i+1}$ werden in diesen jeweiligen Zeitintervallen $T_{Int}$ ermittelt und den jeweiligen Zeitwerten $t_{i-1}$, $t_i = t_{max}$ und $t_{i+1}$ zugeordnet.

Anschließend wird das lokale Maximum dieser - hier drei - Drehgeschwindigkeitswerte ermittelt. Aus dem Vergleich der Werte $\omega_{i-1}$, $\omega_i$ und $\omega_{i+1}$ ist in Fig. 3 zu erkennen, dass das Maximum dieser drei Werte bei $\omega_i = \omega_{max}$ liegt.

Anschließend wird das Kupplungssollmoment bzw. die Sollvorgabe für den Kupplungsweg moduliert, wobei die Phase dieser Modulation in Abhängigkeit der Phase der Drehgeschwindigkeit der Getriebeeingangswelle bestimmt wird. Hierbei findet eine Orientierung am lokalen Maximum $\omega_i = \omega_{Max}$ statt, so dass ein entsprechendes lokales Extremum, insbesondere lokales Maximum des Kupplungswegs an die entsprechende Stelle gesetzt wird.

Wie bereits in Fig. 3 angedeutet, ist das tatsächliche lokale Maximum der Drehgeschwindigkeit der Getriebeeingangswelle jedoch nicht zum Zeitpunkt $t_i$ gegeben, sondern vielmehr zum Zeitpunkt $t_{Dach}$. Entsprechend beträgt das tatsächliche lokale Maximum der Drehgeschwindigkeit der Getriebeeingangswelle nicht $\omega_i$, sondern $\omega_{Dach}$. Demzufolge ist eine tatsächliche Abweichung zwischen der Phase der Drehgeschwindigkeit der Getriebeeingangswelle und der Phase des modulierten Kupplungsweges gegeben. Diese Verhältnisse sind in Fig. 4 verdeutlicht.

Dort ist in der oberen Hälfte der schwingende Anteil der Getriebeeingangsdrehzahl und in der unteren Hälfte der schwingende, modulierte Anteil des Ist-Weges des Kupplungsstellers dargestellt, dessen Schwingung durch eine Modulation des Sollkupplungswegs bzw. des Sollkupplungsmoments bedingt ist.

In einem zweiten Schritt wird die zeitliche Abweichung zwischen der Lage des im ersten Schritt ermittelten lokalen Maximums der Getriebeeingangsdrehzahl bzw. Drehgeschwindigkeit der Getriebeeingangswelle und der tatsächlichen Lage dieses Maximums der Getriebeeingangsdrehzahl ermittelt.

Diese Abweichung entspricht im Wesentlichen der Abweichung, die zwischen dem lokalen Maximum des Ist-Weges und dem tatsächlichen lokalen Maximum der Getriebeeingangsdrehzahl ermittelt wird.

Hierzu werden verschiedene Einflüsse berücksichtigt, die die Abweichung bedingen.

Anschließend wird die Periode des modulierten Kupplungswegs für eine Periode um die Abweichung $\Delta t$ verändert, um eine Phasenübereinstimmung zu erreichen.

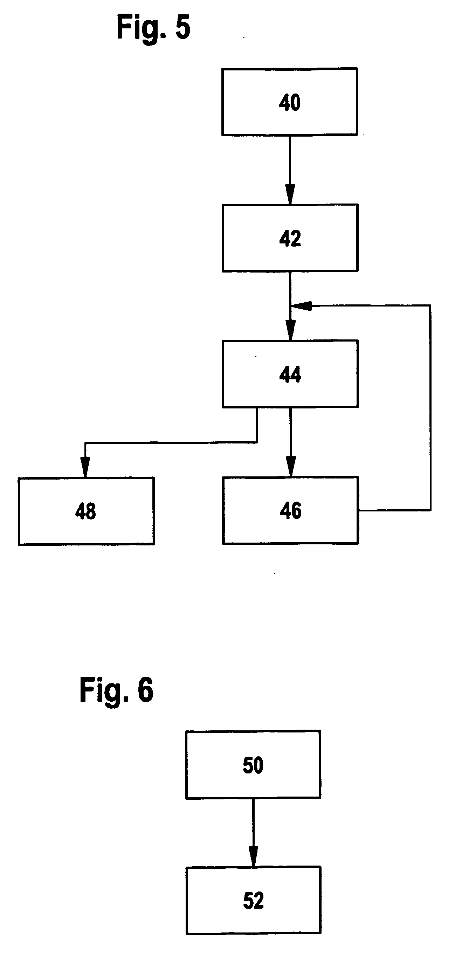

Fig. 5 zeigt die Schritte eines beispielhaften erfindungsgemäßen Verfahrens in schematischer Darstellung. Im Schritt 40 wird ermittelt und / oder festgestellt, ob Rupfschwingungen im Antriebsstrang eines Kraftfahrzeugs gegeben sind.

Im Schritt 42 wird eine Kupplungswegmodulation gestartet, durch welche den Rupfschwingungen entgegengewirkt werden soll.

Die im Schritt 42 gestartete Modulation ist so, dass sich eine Steuerung gemäß ersten und zweiten Zeitabschnitten im Folgenden abwechselt.

Die Steuerung in ersten Zeitabschnitten ist durch den Schritt 44 angedeutet und die Steuerung gemäß zweiten Zeitabschnitten durch den Schritt 46.

In den ersten Zeitabschnitten wird der Kupplungsweg gemäß dem folgenden Zusammenhang moduliert:

$$\text{Weg}_{mod} = (\text{Rampe\_hoch, 1, Rampe\_runter}) * k_{ausreg} * A_{aktuell} * \sin(\omega_{rupfen} * t + \varphi_{aktuell}),$$

Die Kupplungswegmodulation wird also in Abhängigkeit einer Rampenfunktion durchgeführt. Diese ist in diesem Beispiel (Rampe_hoch, 1, Rampe_runter).

Es ist ferner vorgesehen, dass diese Rampe zu Beginn des ersten Zeitabschnitts hochgefahren und am Ende des ersten Zeitabschnitts wieder runtergefahren wird.

Im Schritt 44 ist ferner vorgesehen, die Amplitude $A_{aktuell}$ beim sin-Nulldurchgang anhand der gemessenen Getriebeeingangsdrehzahl aktualisiert wird.

Innerhalb des ersten Zeitabschnitts bleibt die Phase $\varphi_{aktuell}$ konstant.

Der erste Zeitabschnitt kann beispielsweise eine Dauer von 2 - 3 Rupfenperioden aufweisen.

Nach der Aktualisierung wird überprüft, ob diese Rupfamplitude $A_{aktuell}$ kleiner als eine vorbestimmte Ausschaltschwelle ist.

Sofern dies der Fall ist, wird das Verfahren im Schritt 48 beendet. Sofern dies nicht der Fall ist, wird das Verfahren, nachdem der Schritt 44 beendet ist, im Schritt 46 fortgeführt.

Im Schritt 46 wird die Modulation des Kupplungswegs unterbrochen, so dass das System für eine bestimmte Zeit frei schwingen kann. Dies ist insbesondere eine Zeit, die benötigt und / oder genutzt wird, um die Phase der Schwingungen neu zu bestimmen.

Es wird also eine neue Phase $\varphi_{aktuell}$ bestimmt.

In Abhängigkeit dieser neu bestimmten Phase $\varphi_{aktuell}$ wird das Verfahren anschließend im Schritt 44 fortgefahren.

Fig. 6 zeigt die Schritte eines beispielhaften erfindungsgemäßen Verfahrens in schematischer Darstellung.

Im Schritt 50 wird überprüft, ob in einem Antriebsstrang Rupfschwingungen gegeben sind bzw. wird festgestellt, dass im Antriebsstrang eines Kraftfahrzeugs Rupfschwingungen gegeben sind.

Im Schritt 42 wird damit begonnen, diesen Rupfschwingungen entgegenzuwirken, und zwar durch eine Modulation des von der Kupplung übertragbaren Moments bzw. entsprechend dem folgenden Zusammenhang durchgeführt.

$$M_{Mod} = M - k * (\omega_{Kupplungsscheibe} / i_{Gang} - \omega_{Rad})$$

Der Faktor k wird dabei entsprechend dem folgenden Zusammenhang gewählt:

$$k = [(2 * d / T - \alpha) * f_{nom} * J_{KS} - M_{nom\_0} * f'(S)] / f(S)$$

Dabei ist vorgesehen, dass dieser Faktor k zu Beginn rampenförmig auf seinen Zielwert aufgebaut wird. Diese Rampe ist dabei so, dass der Zielwert des Faktors k nach etwa einer Periode der Rupfschwingung erreicht wird.

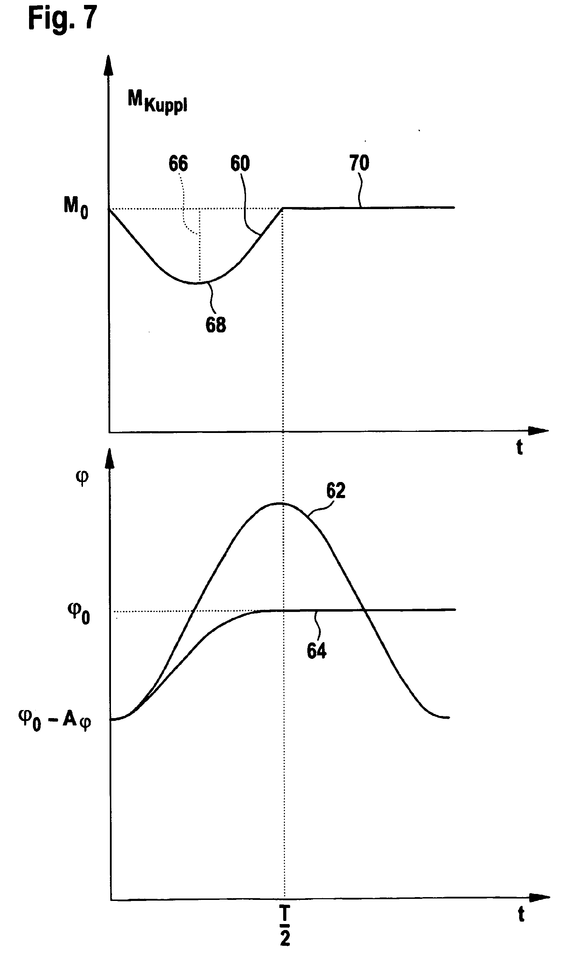

In Fig. 7 ist in der oberen Hälfte ein von einer Kupplungseinrichtung übertragbares, moduliertes Drehmoment (Verlauf 60) dargestellt. In der unteren Hälfte ist in Fig. 7 der Verdrehwinkel eines vorbestimmten Antriebsstrangabschnitts dargestellt (Verlauf 62), der gegeben ist, wenn bei einer vorbestimmten Rupfschwingung keine Momentenmodulation durchgeführt wird. Ferner ist in der unteren Hälfte der Fig. 7 der Verlauf 64 des Verdrehwinkels dargestellt, der sich einstellt, wenn das von der Kupplung übertragbare Drehmoment gemäß dem Verlauf 60 moduliert wird.

Aus dem Verlauf 62 ist ersichtlich, dass in diesem beispielhaften Fall die Rupfschwingung einen im Wesentlichen sinusförmigen Verlauf hat.

Die Modulation des von der Kupplungseinrichtung übertragbaren Drehmoments bzw. des Kupplungswegs wird so vorgenommen, dass die Amplitude 66 einer ersten Halbwelle 68 größer ist als die Amplitude einer zweiten Halbwelle bzw. einer nicht vorhandenen Welle 70.

Es kann vorgesehen sein, dass der Verlauf der Halbwelle 68 so festgelegt ist, dass nach dem Durchlauf der Halbwelle 68 bzw. einer entsprechenden Kupplungsweg- und/oder Momentenmodulation die Rupfschwingung im Wesentlichen abgebaut ist.

Hierzu können entsprechende Randbedingungen vorgegeben sein, anhand welcher der Verlauf der Kupplungsmomentenmodulation bzw. der Halbwelle 68 bestimmt wird.

In den Kurven 62 und 64 ist, wie bereits erwähnt, der Verdrehwinkel eines Antriebsstrangabschnitts über der Zeit dargestellt.

Der Verdrehwinkel $\varphi_0$ entspricht im Wesentlichen dem Verdrehwinkel, der gegeben wäre, wenn keine Rupfschwingung im Antriebsstrang gegeben wäre. Dies ist also insbesondere ein Verdrehwinkel, welcher sich aufgrund einer nicht-schwingenden Antriebsstrangbelastung einstellt, wenn keine selbsterregten Schwingungen gegeben sind.

Wie dem unteren Teil der Fig. 7 entnommen werden kann, schwingt die Kurve 62 im Wesentlichen um diesen Verdrehwinkel $\varphi_0$.

Der Wert $A_\varphi$ entspricht im Wesentlichen der Amplitude, die die Rupfschwingung gemäß der Kurve 62 um den Verdrehwinkel $\varphi_0$ ausübt.

Es kann vorgesehen sein, dass die Halbwelle 64 einer Funktion entspricht, die sich im Wesentlichen ausdrücken lässt als "- a *sin ($\omega$ * t).

Der Verlauf der Rupfschwingung 62 kann beispielsweise durch

$$d^2\varphi/dt + \omega^2 {}^*\varphi = m_0 = \text{konstant}$$

ausgedrückt werden.

$m_0$ stellt dabei eine Konstante dar, während $\varphi$ den Verdrehwinkel und $d^2\varphi/dt$ die zweite zeitliche Ableitung des Verdrehwinkels darstellt.

Es können hier Randbedingungen festgelegt werden, wie beispielsweise eine Randbedingung $\varphi(0) = \varphi_0 - A_\varphi$ und $[d\varphi/dt](0) = 0$ und $\varphi(T/2) = \varphi_0$ und $[d\varphi/dt](T/2) = 0)$. Hierdurch werden in dieser Gestaltung beispielhaft Bedingungen festgelegt, die zu den Zeitpunkten "0" bzw. "T/2" gegeben sein sollen.

Anhand dieser Randbedingungen und dieser Verläufe wird in diesem Beispiel der Faktor a der Momentenmodulation ermittelt. Dieser ergibt sich in diesem Beispiel - da die Momentenmodulation der Rupfschwingung entgegenwirken soll, also hier

$$d^2\varphi/dt + \omega^2 {}^* \varphi = m_0 - a * \sin(\omega * t)$$

gilt - zu

$$a = 2 {}^* \omega^2 A_\varphi / \pi$$

Wie der Verlauf 64 in Fig. 7 zeigt, wird bei einer entsprechenden Wahl von a bewirkt, dass die Rupfschwingung nach einer halben Periode (T/2) dieser Rupfschwingung im Wesentlichen beseitigt ist, bzw. der Verdrehwinkel des Antriebsstrangabschnitts im Wesentlichen dem Verdrehwinkel $\varphi_0$ entspricht

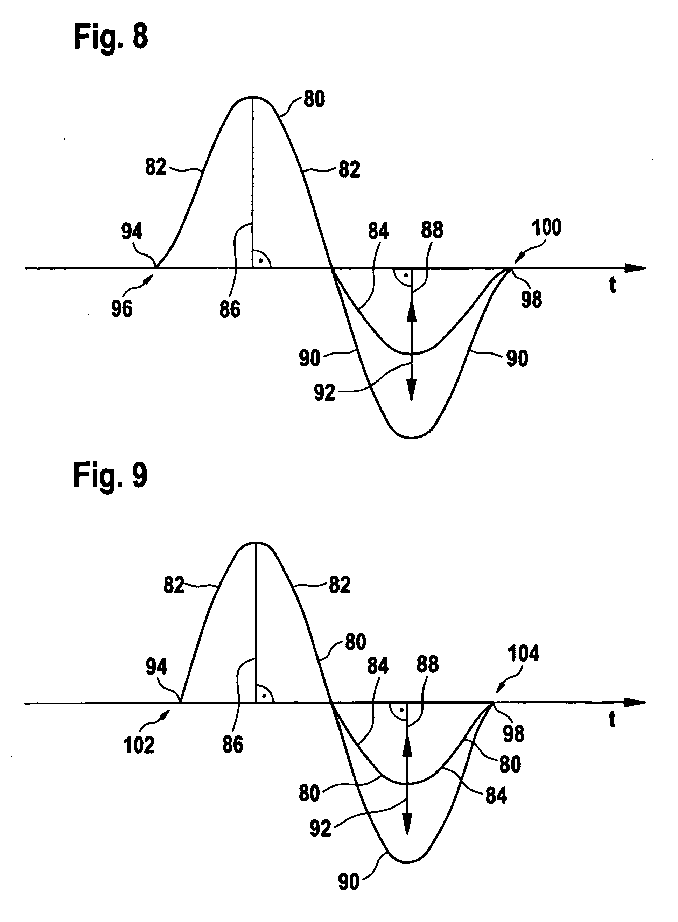

Die Fig. 8 und 9 zeigen zwei beispielhafte Verläufe eines abschnittsweise modulierten Kupplungsmomentes über der Zeit. Eine solches, moduliertes Kupplungsmoment kann verwendet werden, um Rupfschwingungen in einem Antriebsstrang entgegenzuwirken.

Es sei angemerkt, dass die Zeitachse, die in den Fig. 8 und 9 dargestellt ist, in vertikaler Richtung verschoben ist.

In den Fig. 8 und 9 weist der Verlauf 80 des modulierten Kupplungsmomentes eine erste Halbwelle 82 auf, sowie eine zweite Halbwelle 84.

Die Amplitude 86 der ersten Halbwelle 82 ist größer als die Amplitude 88 der zweiten Halbwelle 84. Dies wird auch deutlich anhand einer zusätzlich in den Fig. 8 und 9 dargestellten fiktiven Halbwelle 90, deren fiktive Amplitude im Wesentlichen der der ersten Halbwelle 82 entspricht. Diese Halbwelle 90 ist zum Vergleich gezeigt, obwohl in einer anderen erfindungsgemäßen Gestaltung der Verlauf einer zweiten Halbwelle auch so sein kann, wie der der Halbwelle 90.

Durch den Doppelpfeil 92 ist angedeutet, dass der Verlauf der zweiten Halbwelle 82 auch anders sein kann, wobei insbesondere die Amplitude der zweiten Halbewelle 84 verändert wird.

Die Gestaltungen gemäß den Fig. 8 und 9 unterscheiden sich insbesondere durch den Ein- bzw. Auslauf der jeweiligen Halbwellen 82, 84 der Schwingungen.

In Fig. 8 ist der Einlauf 94, der am Beginn der Periode gegeben ist, im Wesentlichen so, dass sich die Zeitachse bzw. eine Parallele zur Zeitachse im Wesentlichen in Form einer Tangente an den Einlauf bzw. das modulierte Kupplungsmoment anlegt, wie im Bereich 96 gezeigt ist.

In entsprechender Weise läuft das modulierte Kupplungsmoment gemäß Fig. 8 am Ende der Periode so aus, dass sich die Zeitachse bzw. eine Parallele zur Zeitachse im Wesentlichen in Form einer Tangente an den Auslauf 98 bzw. das modulierte Kupplungsmoment anlegt, wie im Bereich 100 gezeigt ist.

In der Gestaltung gemäß Fig. 9 ist der Einlauf 94 bzw. der Auslauf 98 am Anfang bzw. Ende einer Periode abweichend gestaltet, und zwar so, dass die Zeitachse bzw. eine hierzu parallele Achse unter einem Winkel zur jeweiligen Tangente im Bereich des Einlaufs 94 bzw. Auslaufs 98 angeordnet ist. Dies ist in den Bereichen 102 und 104 gezeigt.

**Patentansprüche**

1. Verfahren zum Vermindern von Rupfschwingungen in einem Kraftfahrzeug-Antriebsstrang, der von einer Antriebseinrichtung, wie Brennkraftmaschine, belastet werden kann und eine Kupplungseinrichtung sowie eine Getriebeeinrichtung aufweist, mit den Schritten:

   - Ermitteln, ob Rupfschwingungen gegeben sind, und / oder Feststellen, dass Rupfschwingungen gegeben sind;
   - Verstellen, und zwar insbesondere automatisches Verstellen, einer Einrichtung, um den Rupfschwingungen entgegenzuwirken, wobei diese Einrichtung so im Antriebsstrang angeordnet oder mit diesem gekoppelt ist, dass durch eine Verstellung dieser Einrichtung ein einem Antriebstrangbauteil zugeordneter Drehkennwert, wie Drehmoment oder Drehzahl, verändert wird und durch diese Veränderung der zeitliche Verlauf der Rupfschwingung verändert wird, **dadurch gekennzeichnet, dass** das von der Kupplungseinrichtung übertragbare.Drehmoment und / oder der Kupplungsweg moduliert wird, um den Rupfschwingungen entgegenzuwirken.

2. Verfahren nach Anspruch 1, **dadurch gekennzeichnet, dass** das von der Kupplungseinrichtung übertragbare Drehmoment und / oder der Kupplungsweg sinusförmig moduliert wird.

3. Verfahren nach einem der vorangehenden Ansprüche, **dadurch gekennzeichnet, dass** wenigstens ein vorbestimmter Kennwert des zeitlichen Verlaufes der Rupfschwingung und / oder ein Drehkennwert eines Antriebsstrangbauteils, wie Getriebeeingangsdrehzahl, ermittelt wird.

4. Verfahren nach einem der vorangehenden Ansprüche, **dadurch gekennzeichnet, dass** die Phase und / oder Amplitude und / oder Periodendauer der Rupfschwingung in Abhängigkeit der Getriebeeingangsdrehzahl ermittelt wird.

5. Verfahren nach einem der vorangehenden Ansprüche, **dadurch gekennzeichnet, dass** die Phase und / oder Amplitude und / oder Periodendauer der Schwingungs-Modulation des Kupplungsweges und / oder des übertragbaren Kupplungsmoments in Abhängigkeit der Getriebeeingangsdrehzahl ermittelt wird.

6. Verfahren nach einem der Ansprüche 3 bis 5, **dadurch gekennzeichnet, dass** die Getriebeeingangsdrehzahl gemessen wird.

7. Verfahren nach einem der vorangehenden Ansprüche, **dadurch gekennzeichnet, dass** die Getriebeeingangsdrehzahl so gemessen wird, dass zeitlich beabstandet Drehzahlsignale bereitgestellt werden.

8. Verfahren nach einem der vorangehenden Ansprüche, **dadurch gekennzeichnet, dass** die Periode und / oder die Phase und / oder die Amplitude des modulierten, von der Kupplungseinrichtung übertragbaren Drehmoments und / oder des modulierten Kupplungsweges und / oder der Rupfschwingung in Abhängigkeit von wenigstens einem lokalen Extremum, insbesondere von wenigstens einem lokalen Maximum, der ermittelten Getriebeeingangsdrehzahl ermittelt wird.

9. Verfahren nach einem der vorangehenden Ansprüche, **dadurch gekennzeichnet, dass** die Periode und / oder die Phase und / oder die Amplitude des modulierten, von der Kupplungseinrichtung übertragbaren Drehmoments und / oder des modulierten Kupplungsweges in Abhängigkeit einer ermittelten Periode und / oder Phase und / oder Amplitude der Rupfschwingung und / oder der Getriebeeingangsdrehzahl bestimmt wird.

10. Verfahren nach einem der vorangehenden Ansprüche, **dadurch gekennzeichnet, dass**

    - ein erster Kennwert der Rupfschwingung und / oder des zeitlichen Verlaufs der Getriebeeingangsdrehzahl mittels einer Abschätzung und / oder Messung und / oder Berechnung in einem ersten Schritt ermittelt wird; und
    - dieser erste Kennwert in einem zweiten Schritt in Abhängigkeit des Ergebnisses des ersten Schritts zur Verbesserung und / oder Überprüfung der Genauigkeit des im ersten Schritt ermittelten Kennwerts ermittelt wird.

11. Verfahren nach Anspruch 10, **dadurch gekennzeichnet, dass** der erste Kennwert ein lokales Extremum des zeitlichen Verlaufes der Rupfschwingung und / oder der Getriebeeingangsdrehzahl ist, oder die zeitliche Lage eines solchen Extremums.

12. Verfahren nach einem der vorangehenden Ansprüche, **dadurch gekennzeichnet, dass** die Getriebeeingangsdrehzahl so gemessen und / oder ausgewertet wird, dass zeitlich beabstandet Drehzahlsignale bereitgestellt werden, und in einem ersten Schritt die zeitliche Lage wenigstens eines lokalen Extremums, insbesondere lokalen Maximums, dieser Messwerte ermittelt wird, wobei dieses lokale Extremum insbesondere im zeitlichen Verlauf dasjenige ist, dass zuletzt aufgetreten ist, und wobei in einem zweiten Schritt die tatsächliche Lage eines lokalen Extremum, insbesondere lokalen Maximums, der Rupfschwingung und / oder der Getriebeeingangsdrehzahl ermittelt und / oder weiter angenähert wird.

13. Verfahren nach Anspruch 12, **dadurch gekennzeichnet, dass** der Zeitabstand bzw. die zeitliche Abweichung zwischen dem im ersten Schritt ermittelten lokalen Extremum, insbesondere lokalen Maximum, und dem im zweiten Schritt ermittelten lokalen Extremum, insbesondere lokalen Maximum, ermittelt wird.

14. Verfahren nach einem der vorangehenden Ansprüche, **dadurch gekennzeichnet, dass** in einem ersten Schritt eine Phasenlage der Rupfschwingung und / oder des zeitlichen Verlaufs der Getriebeeingangsdrehzahl ermittelt wird, wobei hierzu insbesondere ein im ersten Schritt ermitteltes lokales Extremum, insbesondere lokales Maximum, der Getriebeeingangsdrehzahl verwendet wird, welches ein lokales Extremum zeitlich beabstandet bereitgestellter Drehzahlsignale ist, und zwar insbesondere gemessener Drehzahlsignale, und wobei in einem zweiten Schritt die Abweichung zwischen der im ersten Schritt ermittelten Phasenlage und der tatsächlichen Phasenlage und / oder die Abweichung eines im ersten Schritt ermittelten lokalen Extremums vom tatsächlichen Extremum ermittelt wird.

15. Verfahren nach Anspruch 14, **dadurch gekennzeichnet, dass** bei der Ermittlung der Abweichung berücksichtigt wird, dass im ersten Schritt zeitlich beabstandete Drehzahlsignale verwendet wurden, und / oder Messungenauigkeiten, die durch die Drehzahlmessung im ersten Schritt bedingt sind.

16. Verfahren nach einem der Ansprüche 14 bis 15, **dadurch gekennzeichnet, dass** eine vorbestimmte Steuerung oder Auswertung, insbesondere Messwertauswertung, in einem vorbestimmten Zeitfenster ($T_{int}$) einmal stattfindet, in dem ein vorbestimmter Messwert bzw. Messwertpaar eines vorbestimmten Kennwerts, wie Getriebeeingangsdrehzahl, für dieses Zeitfenster bereitgestellt bzw. berücksichtigt wird und dieser Umstand bei der Ermittlung der Abweichung berücksichtigt wird.

17. Verfahren nach einem der Ansprüche 14 bis 16, **dadurch gekennzeichnet, dass** bei der Ermittlung der Abweichung ein etwaiger Anstieg der Getriebeeingangsdrehzahl berücksichtigt wird, der im Wesentlichen von der Rupfschwingung unabhängig ist.

18. Verfahren nach einem der Ansprüche 13 bis 17, **dadurch gekennzeichnet, dass** bei der Ermittlung der Abweichung ein Kennwert, mehrere Kennwerte oder alle Kennwerte der folgenden Kennwerte verwendet werden:

    - Interruptzeit $T_{int}$, wobei die Interruptzeit $T_{int}$ die Dauer einer Zeitperiode ist, in der eine Auswertung, insbesondere Messwertauswertung der Winkelgeschwindigkeit der Getriebeeingangswelle, einmal stattfindet und für die ein Messwert bzw. Messwertpaar bereitgestellt wird;
    - Mediane, wobei die Mediane den Schwerpunkt vorbestimmten Messwertpaaren angibt, und zwar insbesondere von Zuordnungen der Winkelgeschwindigkeit der Getriebeeingangswelle zu Zeitpunkten, zu denen diese Winkelgeschwindigkeiten gegeben sind;
- ein Zeitpunkt ($t_{max}$), der gegeben ist, wenn ein lokales Extremum, insbesondere lokales Maximum, bezogen auf zeitlich beabstandet bereitgestellte Drehzahl- bzw. Winkelgeschwindigkeitssignale der Getriebeeingangswelle, welche gegebenenfalls in einem ersten Schritt festgestellt wurde, gegeben ist bzw. der diesem zugeordnet ist;
- lokales Extremum, insbesondere lokales Maximum ($\omega_{max}$), welches auf zeitlich beabstandet bereitgestellte Drehzahl- bzw. Winkelgeschwindigkeitssignale der Getriebeeingangswelle bezogen ist, welche gegebenenfalls in einem ersten Schritt festgestellt wurde;
- Amplitude der Rupfschwingung (A), und zwar insbesondere letzte Amplitude der Rupfschwingung;
- Frequenz der Rupfschwingung ($\omega_{Rupfen}$)/($2^*\pi$));
- gesamte (durchschnittliche) Steigung der Winkelgeschwindigkeit der Getriebeeingangswelle (B);
- Winkel zwischen zwei Zähnen eines Weggebers ($\varphi_{Puls}$).

19. Verfahren nach einem der Ansprüche 13 bis 18, **dadurch gekennzeichnet, dass** mittels der ermittelten Abweichung ein tatsächliches lokales Extremum, insbesondere Maximum, der Winkelgeschwindigkeit der Getriebeeingangswelle ermittelt wird oder angenähert wird, und / oder die tatsächliche Phase der Winkelgeschwindigkeit der während des Rupfens auch schwingend bewegten Getriebeeingangswelle.

20. Verfahren nach einem der Ansprüche 4, 5, 8, 9, 14, 19, **dadurch gekennzeichnet, dass** die im ersten Schritt ermittelte Phasenlage, und insbesondere die Phasenlage der Winkelgeschwindigkeit der Getriebeeingangswelle und / oder der Rupfschwingung, zunächst für eine Modulation des Kupplungssollweges und / oder des von der Kupplungseinrichtung übertragbaren Drehmoments verwendet wird.

21. Verfahren nach einem der Ansprüche 4, 5 ,8, 9, 14, 19, 20, **dadurch gekennzeichnet, dass** die Phasenlage der Drehzahl und / oder der Winkelgeschwindigkeit der Getriebeeingangswelle und / oder der Rupfschwingung, die in einem zweiten Schritt an die tatsächliche Phasenlage dieser Getriebeeingangsdrehzahl und / oder der Rupfschwingung zumindest angenähert wird, und / oder die Abweichung für die Modulation des Kupplungssollweges und / oder des von der Kupplungseinrichtung übertragbaren Drehmoments verwendet wird.

22. Verfahren nach einem der Ansprüche 8 bis 21, **dadurch gekennzeichnet, dass** die zeitliche Abweichung der zeitlichen Lage zwischen einem in einem ersten Schritt ermittelten Extremum, insbesondere lokalen Maximum, der Getriebeeingangsdrehzahl und einem in einem zweiten Schritt an die zeitliche Lage eines tatsächlichen Extremum, insbesondere Maximum zumindest, angenäherten Wert für dieses lokale Extremum, verwendet wird, um die Periodendauer der Modulation des Kupplungssollweges und / oder des von der Kupplungseinrichtung übertragbaren Drehmoments zu verändern, und zwar insbesondere um die Phasenlage dieses modulierten Kupplungssollweges und / oder von der Kupplungseinrichtung übertragbaren Drehmoments an die tatsächliche Phasenlage der Drehzahl der Getriebeeingangswelle zumindest weiter anzunähern.

23. Verfahren nach Anspruch 22, **dadurch gekennzeichnet, dass** die Periodendauer der Modulation des Kupplungssollweges und / oder des von der Kupplungseinrichtung übertragbaren Drehmoments so verändert wird, dass sie für eine Periode um diese Abweichung verlängert oder verkürzt wird.

24. Verfahren nach einem der vorangehenden Ansprüche, **dadurch gekennzeichnet, dass** der Kupplungssollweg und / oder das von der Kupplungseinrichtung übertragbare Drehmoment in Abhängigkeit des ermittelten lokalen Extremums, insbesondere lokalen Maximums, und / oder und / oder dessen zeitlichen Lage und / oder einer ermittelten Abweichung moduliert wird, um den Rupfschwingungen entgegenzuwirken.

25. Verfahren nach einem der vorangehenden Ansprüche, **dadurch gekennzeichnet, dass** diese Stellungsveränderung in Abhängigkeit einer vorbestimmten, insbesondere zeitlichen, Funktion vorgegeben wird, welche eine Rampenfunktion aufweist.

26. Verfahren nach einem der vorangehenden Ansprüche, **dadurch gekennzeichnet, dass** den Rupfschwingungen in ersten Zeitabschnitten durch die Veränderung der Stellung der Einrichtung entgegengewirkt wird und in zweiten Zeitabschnitten die Veränderung der Stellung der Einrichtung unterbrochen wird, so dass das System in diesen zweiten Zeitabschnitten frei schwingen kann.

27. Verfahren nach einem der Anspruch 25 und 26, **dadurch gekennzeichnet, dass** die Einrichtung eine Kupplungseinrichtung ist, wobei das von der Kupplungseinrichtung übertragbare Drehmoment und / oder der Kupplungsweg, insbesondere Kupplungssollweg, moduliert wird, um den Rupfschwingungen entgegenzuwirken.

28. Verfahren nach einem der Ansprüche 25 bis 27, **dadurch gekennzeichnet, dass** diese Rampenfunktion einen Abschnitt aufweist, in dem eine Rampe von einem Ausgangswert auf einen Wert hochgefahren wird, sowie einen zeitlich später gelegenen Abschnitt, in dem eine Rampe von diesem Wert auf einen Endwert wieder runter gefahren wird, und zwar insbesondere auf einen Endwert, der dem Ausgangswert entspricht.

29. Verfahren nach einem der Ansprüche 25 bis 28, **dadurch gekennzeichnet, dass** diese Rampenfunktion wenigstens einen ersten Abschnitt aufweist, in dem eine Rampe von einem Ausgangswert auf einen Wert hochgefahren wird, sowie wenigstens einen sich hieran anschließenden zweiten Abschnitt, in welchem die Rampenfunktion auf diesem konstanten Wert gehalten wird, sowie wenigstens einen sich hieran wiederum anschließenden dritten Abschnitt, in welchem die Rampenfunktion von diesem konstanten Wert auf einen Endwert runter gefahren wird, und zwar insbesondere auf einen Endwert, der dem Ausgangswert entspricht.

30. Verfahren nach Anspruch 29, **dadurch gekennzeichnet, dass** der konstante Werte im Wesentlichen gleich "eins" ist.

31. Verfahren nach einem der Ansprüche 25 bis 30, **dadurch gekennzeichnet, dass** der Ausgangswert und der Endwert der Rampenfunktion jeweils gleich "null" sind.

32. Verfahren nach einem der Ansprüche 25 bis 31, **dadurch gekennzeichnet, dass** der modulierte Kupplungsweg in Abhängigkeit eines Ausregelfaktors bestimmt wird, und zwar insbesondere in Abhängigkeit einer Ausregelkonstante.

33. Verfahren nach einem der Ansprüche 25 bis 32, **dadurch gekennzeichnet, dass** der modulierte Kupplungsweg in Abhängigkeit einer Amplitude der Rupfschwingung bestimmt wird, und zwar insbesondere in Abhängigkeit der zuletzt abgefundenen.

34. Verfahren nach einem der Ansprüche 25 bis 33, **dadurch gekennzeichnet, dass** der modulierte Kupplungsweg in Abhängigkeit einer Sinusfunktion bestimmt wird, und zwar insbesondere in Abhängigkeit einer Sinusfunktion, die von der Frequenz des Rupfens und / oder von der Zeit und / oder von einer ermittelten Phasenverschiebung zwischen der Rupfschwingung und dem Verlauf der Wegmodulation anhängt.

35. Verfahren nach Anspruch 33 und Anspruch 34, **dadurch gekennzeichnet, dass** der modulierte Kupplungsweg in Abhängigkeit einer Amplitude der Rupfschwingung und in Abhängigkeit einer Sinusfunktion bestimmt wird, wobei diese Amplitude beim Nulldurchgang der Sinusfunktion aktualisiert wird, und zwar insbesondere in Abhängigkeit der Getriebeeingangsdrehzahl.

36. Verfahren nach einem der vorangehenden Ansprüche, **dadurch gekennzeichnet, dass** sich die Veränderung der Stellung der Einrichtung, insbesondere Kupplungswegmodulation, in ersten Zeitabschnitten und die ausbleibende Veränderung dieser Stellung in zweiten Zeitabschnitten abwechseln, wenn festgestellt wird, dass Rupfschwingungen gegeben sind, und zwar insbesondere bis festgestellt wird, dass die Amplitude der Rupfschwingung kleiner als eine vorbestimmte Ausschaltschwelle ist.

37. Verfahren nach einem der Ansprüche 25 bis 36, **dadurch gekennzeichnet, dass** die Dauer der ersten Zeitabschnitte zwischen einer und fünf Rupfenperioden entspricht, insbesondere zwei bis drei Rupfenperioden.

38. Verfahren nach einem der Ansprüche 25 bis 37, **dadurch gekennzeichnet, dass** der modulierte Kupplungsweg in Abhängigkeit einer Phasenverschiebung zwischen der Rupfschwingung und dem Verlauf der Ist-Wegmodulation bestimmt wird und / oder in Abhängigkeit einer Sinusfunktion, die von dieser Phasenverschiebung abhängt, wobei diese, aktuelle Phasenverschiebung in zweiten Zeitperioden aktualisiert wird.

39. Verfahren nach einem der Ansprüche 25 bis 38, **dadurch gekennzeichnet, dass** der modulierte Kupplungsweg in Abhängigkeit einer Phasenverschiebung zwischen der Rupfschwingung und dem Verlauf der Ist-Wegmodulation bestimmt wird und / oder in Abhängigkeit einer Sinusfunktion, die von dieser Phasenverschiebung abhängt, wobei diese, aktuelle Phasenverschiebung in ersten Zeitperioden für die Kupplungswegmodulation als Konstante berücksichtigt wird, und zwar insbesondere zumindest teilweise entsprechend einem Wert, der einer vorherigen zweiten Zeitperiode ermittelt wurde.

**40.** Verfahren nach Anspruch 1 , **dadurch gekennzeichnet, dass** in diesem Antriebsstrang eine Kupplungseinrichtung angeordnet ist, welche in einem Schlupfbetrieb betrieben werden kann, und wobei ermittelten Rupfschwingungen durch eine Modulation des von der Kupplungseinrichtung übertragbaren Drehmoments und / oder des Kupplungswegs entgegengewirkt wird, und wobei diese Modulation so ist, dass ein moduliertes Kupplungssollmoment angesteuert wird, welches als Differenz aus dem unmodulierten Kupplungsmoment und einem Produkt bestimmt wird, wobei ferner dieses Produkt einen ersten Faktor aufweist, der von der Winkelgeschwindigkeit einer Kupplungsscheibe und / oder von der Winkelgeschwindigkeit einer Getriebeeingangswelle und / oder von der Winkelgeschwindigkeit eines Rades des Kraftfahrzeugs und / oder von einer Übersetzung abhängt, die einem Gang zugeordnet ist, der in einer im Antriebsstrang angeordneten Getriebeeinrichtung geschaltet ist, und wobei dieses Produkt einen zweiten Faktor aufweist, der eine Ausregelkonstante ist, wobei ferner diese Ausregelkonstante von Kennwerten des schwingenden Antriebstrangsystems abhängt und / oder von Kennwerten, die die Reibcharakteristik der Kupplungseinrichtung beschreiben oder zumindest mitbeschreiben.

**41.** Verfahren nach Anspruch 1, **dadurch gekennzeichnet, dass** in diesem Antriebsstrang eine Kupplungseinrichtung angeordnet ist, welche in einem Schlupfbetrieb betrieben werden kann, und wobei ermittelten Rupfschwingungen durch eine Modulation des von der Kupplungseinrichtung übertragbaren Drehmoments und / oder des Kupplungswegs entgegengewirkt wird, und wobei diese Modulation so ist, dass ein moduliertes Kupplungssollmoment angesteuert wird, welches als Differenz aus dem unmodulierten Kupplungsmoment und einem Produkt bestimmt wird, wobei ferner dieses Produkt einen ersten Faktor aufweist, der von der Winkelgeschwindigkeit einer Kupplungsscheibe und / oder von der Winkelgeschwindigkeit einer Getriebeeingangswelle und / oder von der Winkelgeschwindigkeit eines Rades des Kraftfahrzeugs und / oder von einer Übersetzung abhängt, die einem Gang zugeordnet ist, der in einer im Antriebsstrang angeordneten Getriebeeinrichtung geschaltet ist, und wobei dieses Produkt einen zweiten Faktor aufweist, der eine Ausregelkonstante ist, wobei ferner diese Ausregelkonstante vom Kupplungssollmoment und / oder von einem nominellen Kupplungsmoment, das unter der Annahme eines nominellen Reibwerts ermittelt wird, und / oder von einer Funktion eines gemittelten Schlupfes abhängt.

**42.** Verfahren nach einem der Ansprüche 40 oder 41, **dadurch gekennzeichnet, dass** die Ausregelkonstante von einer Funktion abhängt, welche beschreibt, wie sich der Reibwert der Kupplungseinrichtung über dem Schlupf der Kupplungseinrichtung ändert, und / oder von der zeitlichen Ableitung einer solchen Funktion.

**43.** Verfahren nach einem der Ansprüche 40 bis 42, **dadurch gekennzeichnet, dass** die Ausregelkonstante von der Periode T der Rupfschwindung abhängt.

**44.** Verfahren nach einem der Ansprüche 40 bis 43, **dadurch gekennzeichnet, dass** die Ausregelkonstante vom Trägheitsmoment einer Kupplungsscheibe und / oder des Getriebeeingangs abhängt.

**45.** Verfahren nach einem der Ansprüche 40 bis 44, **dadurch gekennzeichnet, dass** die Ausregelkonstante von einem nominellen Reibwert der Kupplungseinrichtung abhängt.

**46.** Verfahren nach einem der Ansprüche 40 bis 45, **dadurch gekennzeichnet, dass** die Ausregelkonstante von einem Quotienten zweier zeitlich aufeinander folgender Amplituden der Rupfschwingung abhängt, und zwar insbesondere vom Logarithmus eines solchen Quotienten.

**47.** Verfahren nach einem der Ansprüche 25, 28, 29, 31 oder 44, **dadurch gekennzeichnet, dass** die Rampe auf Ihren Zielwert innerhalb von etwa einer Periode der Rupfschwingung aufgebaut wird.

**48.** Verfahren nach Anspruch 1, **dadurch gekennzeichnet, dass** in diesem Antriebsstrang eine Kupplungseinrichtung angeordnet ist, welche in einem Schlupfbetrieb betrieben werden kann, und wobei ermittelten Rupfschwingungen durch eine Modulation des von der Kupplungseinrichtung übertragbaren Drehmoments und / oder des Kupplungswegs entgegengewirkt wird, und wobei diese Modulation so ist, dass die Modulation in unterschiedlichen Abschnitten gemäß einer unterschiedlichen Charakteristik durchgeführt wird.

**49.** Verfahren nach Anspruch 1, **dadurch gekennzeichnet, dass** in diesem Antriebsstrang eine Kupplungseinrichtung angeordnet ist, welche in einem Schlupfbetrieb betrieben werden kann, und wobei ermittelten Rupfschwingungen durch eine Modulation des von der Kupplungseinrichtung übertragbaren Drehmoments und / oder des Kupplungswegs entgegengewirkt wird, und wobei diese Modulation so ist, dass sie schwingungsartig gestaltet ist und eine erste Halbwelle (68, 82) sowie gegebenenfalls eine zweite Halbwelle (70, 84) aufweist, wobei die Amplitude (66, 86) der ersten Halbwelle größer als die Amplitude (88) der zweiten Halbwelle (70, 84) ist.

50. Verfahren nach Anspruch 49, **dadurch gekennzeichnet, dass** die Modulation nach der zweiten Halbwelle (70, 84) unterbrochen oder beendet wird und die Phase der Rupfschwingung ermittelt wird, und zwar insbesondere mittels wenigstens eines lokalen Extremums, wie lokales Maximum, der Rupfschwingung und / oder der Getriebeeingangsdrehzahl.

51. Verfahren nach Anspruch 49, **dadurch gekennzeichnet, dass** die Amplitude (88) der zweiten Halbwelle (70, 84) gleich "null" ist.

52. Verfahren nach Anspruch 50, **dadurch gekennzeichnet, dass** die Modulation nach der ersten Halbwelle (68, 82) unterbrochen oder beendet wird und die Phase der Rupfschwingung ermittelt wird, und zwar insbesondere mittels wenigstens eines lokalen Extremums, wie lokales Maximum, der Rupfschwingung und / oder der Getriebeeingangsdrehzahl.

53. Verfahren nach einem der Ansprüche 49 bis 52, **dadurch gekennzeichnet, dass** die erste Halbwelle (68, 82) und / oder die zweite Halbwelle (70, 84) eine Halbwelle (68, 70, 82, 84) einer Sinusschwingung ist.

54. Verfahren nach einem der vorangehenden Ansprüche, **dadurch gekennzeichnet, dass** die Modulation mit einer Phasenverschiebung gegenüber der Rupfschwingung gestartet wird.

55. Verfahren nach Anspruch 54, **dadurch gekennzeichnet, dass** die Modulation gestartet wird, wenn ein lokales Extremum, insbesondere lokales Maximum, der Rupfschwingung festgestellt wurde.

56. Verfahren nach einem der vorangehenden Ansprüche, **dadurch gekennzeichnet, dass** die Modulation so gestaltet ist, dass eine Tangente des zeitlichen Verlaufs der Modulation des übertragbaren Drehmoments und / oder des Kupplungswegs zu Beginn und / oder am Ende einer Halbwelle (68, 70) im Wesentlichen parallel zur Zeitachse verläuft.

57. Verfahren nach Anspruch 1, **dadurch gekennzeichnet, dass** in diesem Antriebsstrang eine Kupplungseinrichtung angeordnet ist, welche in einen Schlupfbetrieb betrieben werden kann, und wobei ermittelten Rupfschwingungen durch eine Modulation des von der Kupplungseinrichtung übertragbaren Drehmoments und / oder des Kupplungswegs entgegengewirkt wird, und wobei diese Modulation so ist, dass in Abhängigkeit der Rupfschwingung und / oder die Rupfschwingung beschreibender Kennwerte und / oder einer die Rupfschwingung beschreibender Funktion und in Abhängigkeit vorbestimmter Randbedingungen die Modulation bestimmt wird.

58. Verfahren nach Anspruch 57, **dadurch gekennzeichnet, dass** die Rupfschwingung insbesondere in Abhängigkeit des Verdrehwinkels eines vorbestimmten Antriebsstrangabschnitts beschrieben wird.

59. Verfahren nach einem der vorangehenden Ansprüche, **dadurch gekennzeichnet, dass** der Verlauf der Modulation in Abhängigkeit von Variablen vorgegeben wird, und diese Variablen zumindest teilweise anhand der Randbedingungen festgelegt werden.

60. Verfahren nach einem der Ansprüche 57 bis 59, **dadurch gekennzeichnet, dass** eine Randbedingung ist, dass der Verdrehwinkel zum Zeitpunkt "null" der Differenz aus dem Verdrehwinkel, der beim gegebenen Belastungsfall unter Außerachtlassung der Rupfschwingung gegeben wäre, und der Winkelamplitude der Rupfschwingung entspricht.

61. Verfahren nach einem der Ansprüche 57 bis 60, **dadurch gekennzeichnet, dass** eine Randbedingung ist, dass die zeitliche Ableitung des Verdrehwinkels zum Zeitpunkt "null" gleich "null" ist.

62. Verfahren nach einem der Ansprüche 57 bis 61, **dadurch gekennzeichnet, dass** eine Randbedingung ist, dass der Verdrehwinkel zum Zeitpunkt der halben Periodendauer der Rupfschwingung dem Verdrehwinkel entspricht, der beim gegebenen Belastungsfall unter Außerachtlassung der Rupfschwingung gegeben wäre.

63. Verfahren nach einem der Ansprüche 57 bis 62, **dadurch gekennzeichnet, dass** eine Randbedingung ist, dass die zeitliche Ableitung des Verdrehwinkels zum Zeitpunkt der halben Periodendauer der Rupfschwingung gleich "null" ist.

64. Verfahren nach einem der Ansprüche 57 bis 63, **dadurch gekennzeichnet, dass** die Periodendauer der Modulation des von der Kupplungseinrichtung übertragbaren Drehmoments und / oder des Kupplungswegs der halben Periodendauer der Rupfschwingung entspricht.

**65.** Verfahren nach einem der Ansprüche 57 bis 64, **dadurch gekennzeichnet, dass** das von der Kupplungseinrichtung übertragbare Drehmoment und / oder der Kupplungsweg betragsmäßig entsprechend einer Funktion a*sin(ω*t) moduliert wird, wobei a ein Faktor ist, ω dem 2*π-fachen der Frequenz der Modulationsschwingung entspricht und t die Zeit ist.

## Claims

**1.** Method for reducing juddering vibrations in a motor vehicle drivetrain which can be subjected to load by a drive device such as an internal combustion engine and which has a clutch device and a transmission device, having the steps:

- determining whether juddering vibrations are present, and/or establishing that juddering vibrations are present;
- adjusting, specifically in particular automatically adjusting, a device in order to counteract the juddering vibrations, with said device being arranged in or coupled to the drivetrain such that an adjustment of said device causes a change in a rotational characteristic value, such as a torque or rotational speed, assigned to a drivetrain component, and said change results in a change in the time profile of the juddering vibration, **characterized in that** the torque transmissible by the clutch device and/or the clutch travel is modulated in order to counteract the juddering vibrations.

**2.** Method according to Claim 1, **characterized in that** the torque transmissible by the clutch device and/or the clutch travel is modulated sinusoidally.

**3.** Method according to one of the preceding claims, **characterized in that** at least one predetermined characteristic value of the time profile of the juddering vibration and/or a rotational characteristic value of a drivetrain component, such as a transmission input rotational speed, is determined.

**4.** Method according to one of the preceding claims, **characterized in that** the phase and/or amplitude and/or period duration of the juddering vibration is determined as a function of the transmission input rotational speed.

**5.** Method according to one of the preceding claims, **characterized in that** the phase and/or amplitude and/or period duration of the vibration modulation of the clutch travel and/or of the transmissible clutch torque is determined as a function of the transmission input rotational speed.

**6.** Method according to one of Claims 3 to 5, **characterized in that** the transmission input rotational speed is measured.

**7.** Method according to one of the preceding claims, **characterized in that** the transmission input rotational speed is measured such that rotational speed signals are provided at time intervals.

**8.** Method according to one of the preceding claims, **characterized in that** the period and/or the phase and/or the amplitude of the modulated torque transmissible by the clutch device and/or of the modulated clutch travel and/or of the juddering vibration is determined as a function of at least one local extremum, in particular of at least one local maximum, of the determined transmission input rotational speed.

**9.** Method according to one of the preceding claims, **characterized in that** the period and/or the phase and/or the amplitude of the modulated torque transmissible by the clutch device and/or of the modulated clutch travel is determined as a function of a determined period and/or phase and/or amplitude of the juddering vibration and/or of the transmission input rotational speed.

**10.** Method according to one of the preceding claims, **characterized in that**

- a first characteristic value of the juddering vibration and/or of the time profile of the transmission input rotational speed is determined by means of an estimation and/or measurement and/or calculation in a first step; and
- in a second step, said first characteristic value is determined as a function of the result of the first step in order to improve and/or check the accuracy of the characteristic value determined in the first step.

11. Method according to Claim 10, **characterized in that** the first characteristic value is a local extremum of the time profile of the juddering vibration and/or of the transmission input rotational speed, or the time position of such an extremum.

12. Method according to one of the preceding claims, **characterized in that** the transmission input rotational speed is measured and/or evaluated such that rotational speed signals are provided at time intervals, and in a first step, the time position of at least one local extremum, in particular local maximum, of said measurement values is determined, with said local extremum being in particular that which occurred most recently in the time profile, and with the actual position of a local extremum, in particular local maximum, of the juddering vibration and/or of the transmission input rotational speed being determined and/or more closely approximated in a second step.

13. Method according to Claim 12, **characterized in that** the time interval or the time deviation between the local extremum, in particular local maximum, determined in the first step and the local extremum, in particular local maximum, determined in the second step is determined.

14. Method according to one of the preceding claims, **characterized in that**, in a first step, a phase position of the juddering vibration and/or of the time profile of the transmission input rotational speed is determined, wherein for this purpose use is made in particular of a local extremum, in particular local maximum, determined in the first step, of the transmission input rotational speed, which local extremum is a local extremum of rotational speed signals provided at time intervals, specifically in particular measured rotational speed signals, and wherein in a second step, the deviation between the phase position determined in the first step and the actual phase position, and/or the deviation of a local extremum determined in the first step from the actual extremum, is determined.

15. Method according to Claim 14, **characterized in that**, in determining the deviation, consideration is given to the fact that rotational speed signals at time intervals were used in the first step, and/or to measurement inaccuracies arising from the rotational speed measurement in the first step.

16. Method according to one of Claims 14 to 15, **characterized in that** a predetermined control or evaluation, in particular measurement value evaluation, takes place once in a predetermined time window (Tint) by virtue of a predetermined measurement value or measurement value pair of a predetermined characteristic value, such as transmission input rotational speed, being provided or taken into consideration for said time window, and this fact being taken into consideration in determining the deviation.

17. Method according to one of Claims 14 to 16, **characterized in that** any rise in the transmission input rotational speed which is substantially independent of the juddering vibration is taken into consideration in determining the deviation.

18. Method according to one of Claims 13 to 17, **characterized in that** one characteristic value, a plurality of characteristic values or all the characteristic values from the following list of characteristic values are used in determining the deviation:

- interrupt time $T_{int}$, with the interrupt time Tint being the duration of a time period in which an evaluation, in particular measurement value evaluation of the angular speed of the transmission input shaft, takes place once and for which a measurement value or measurement value pair is provided;
- median, with the median indicating the focus of predetermined measurement value pairs, specifically in particular of assignments of the angular speed of the transmission input shaft to points in time at which said angular speeds are present;
- a point in time ($t_{max}$) at which a local extremum, in particular local maximum, in relation to rotational speed or angular speed signals, provided at time intervals and if appropriate detected in a first step, of the transmission input shaft is present or which is assigned to said local extremum;
- local extremum, in particular local maximum ($\omega_{max}$), in relation to rotational speed or angular speed signals, provided at time intervals and if appropriate detected in a first step, of the transmission input shaft;
- amplitude of the juddering vibration (A), specifically in particular last amplitude of the juddering vibration;
- frequency of the juddering vibration ($\omega_{juddering}$) / (2*$\pi$));
- overall (average) gradient of the angular speed of the transmission input shaft (B);
- angle between two teeth of a travel transducer ($\varphi_{pulse}$).

19. Method according to one of Claims 13 to 18, **characterized in that**, by means of the determined deviation, an actual local extremum, in particular maximum, of the angular speed of the transmission input speed is determined or approximated, and/or the actual phase of the angular speed of the transmission input shaft which is also moved in a vibratory manner during the juddering.

20. Method according to one of Claims 4, 5, 8, 9, 14, 19, **characterized in that** the phase position determined in the first step, and in particular the phase position of the angular speed of the transmission input shaft and/or of the juddering vibration, is used firstly for a modulation of the clutch setpoint travel and/or of the torque transmissible by the clutch device.

21. Method according to one of Claims 4, 5, 8, 9, 14, 19, 20, **characterized in that** the phase position of the rotational speed and/or of the angular speed of the transmission input shaft and/or of the juddering vibration, which in a second step is at least approximated to the actual phase position of said transmission input rotational speed and/or to the juddering vibration, and/or the deviation is used for the modulation of the clutch setpoint travel and/or of the torque transmissible by the clutch device.

22. Method according to one of Claims 8 to 21, **characterized in that** the time deviation of the time position between an extremum determined in a first step, in particular local maximum, of the transmission input rotational speed and a value for said local extremum at least approximated in a second step to the time position of an actual extremum, in particular maximum, is used to vary the period duration of the modulation of the clutch setpoint travel and/or of the torque transmissible by the clutch device, specifically in particular in order to at least approximate the phase position of said modulated clutch setpoint travel and/or torque transmissible by the clutch device more closely to the actual phase position of the rotational speed of the transmission input shaft.

23. Method according to Claim 22, **characterized in that** the period duration of the modulation of the clutch setpoint travel and/or of the torque transmissible by the clutch device is varied such that it is lengthened or shortened by said deviation for a period.

24. Method according to one of the preceding claims, **characterized in that** the clutch setpoint travel and/or the torque transmissible by the clutch device is modulated as a function of the determined local extremum, in particular local maximum, and/or of the time position thereof and/or of a determined deviation in order to counteract the juddering vibrations.

25. Method according to one of the preceding claims, **characterized in that** said position variation is predefined as a function of a predetermined, in particular temporal function which has a ramp function.

26. Method according to one of the preceding claims, **characterized in that** the juddering vibrations are counteracted in first time segments by varying the position of the device, and in second time segments, the variation of the position of the device is ended such that the system can vibrate freely in said second time segments.

27. Method according to one of Claims 25 and 26, **characterized in that** the device is a clutch device, with the torque transmissible by the clutch device and/or the clutch travel, in particular clutch setpoint travel, being modulated in order to counteract the juddering vibrations.

28. Method according to one of Claims 25 to 27, **characterized in that** said ramp function has a section in which a ramp rises from an initial value to a value, and a section which lies later in time and in which a ramp falls again from said value to an end value, specifically in particular to an end value which corresponds to the initial value.

29. Method according to one of Claims 25 to 28, **characterized in that** said ramp function has at least one first section in which a ramp rises from an initial value to a value, and at least one second section which adjoins said first section and in which the ramp function is held at said constant value, and at least one third section which adjoins said second section in turn and in which the ramp function falls from said constant value to an end value, specifically in particular to an end value which corresponds to the initial value.

30. Method according to Claim 29, **characterized in that** the constant value is substantially equal to "one".

31. Method according to one of Claims 25 to 30, **characterized in that** the initial value and the end value of the ramp function are in each case equal to "zero".

**32.** Method according to one of Claims 25 to 31, **characterized in that** the modulated clutch travel is determined as a function of a compensating factor, specifically in particular as a function of a compensating constant.

**33.** Method according to one of Claims 25 to 32, **characterized in that** the modulated clutch travel is determined as a function of an amplitude of the juddering vibration, specifically in particular as a function of the most recently compensated.

**34.** Method according to one of Claims 25 to 33, **characterized in that** the modulated clutch travel is determined as a function of a sinusoidal function, specifically in particular as a function of a sinusoidal function which is dependent on the frequency of the juddering and/or on the time and/or on a determined phase offset between the juddering vibration and the profile of the travel modulation.

**35.** Method according to Claim 33 and Claim 34, **characterized in that** the modulated clutch travel is determined as a function of an amplitude of the juddering vibration and as a function of a sinusoidal function, with said amplitude being updated upon the zero crossing of the sinusoidal function, specifically in particular as a function of the transmission input rotational speed.

**36.** Method according to one of the preceding claims, **characterized in that** the variation of the position of the device, in particular clutch travel modulation, in first time segments and the absence of variation of said position in second time segments alternate if it is detected that juddering vibrations are present, specifically in particular until it is detected that the amplitude of the juddering vibration is smaller than a predetermined deactivation threshold.

**37.** Method according to one of Claims 25 to 36, **characterized in that** the duration of the first time segments corresponds to between one and five judder periods, in particular two to three judder periods.

**38.** Method according to one of Claims 25 to 37, **characterized in that** the modulated clutch travel is determined as a function of a phase offset between the juddering vibration and the profile of the actual travel modulation, and/or as a function of a sinusoidal function which is dependent on said phase offset, with said present phase offset being updated in second time periods.

**39.** Method according to one of Claims 25 to 38, **characterized in that** the modulated clutch travel is determined as a function of a phase offset between the juddering vibration and the profile of the actual travel modulation, and/or as a function of a sinusoidal function which is dependent on said phase offset, with said present phase offset being taken into consideration for the clutch travel modulation in first time periods as a constant, specifically in particular at least partially corresponding to a value which was determined in a preceding second time period.

**40.** Method according to Claim 1, **characterized in that** said drivetrain has arranged in it a clutch device which can be operated in a slipping mode, and with determined juddering vibrations being counteracted by means of a modulation of the torque transmissible by the clutch device and/or of the clutch travel, and with said modulation being such that a modulated clutch setpoint torque is controlled which is determined as a difference between the unmodulated clutch torque and a product, wherein furthermore said product has a first factor which is dependent on the angular speed of a clutch disc and/or on the angular speed of a transmission input shaft and/or on the angular speed of a wheel of the motor vehicle and/or on a transmission ratio which is assigned to a gear which is engaged in a transmission device arranged in the drivetrain, and with said product having a second factor which is a compensating constant, wherein furthermore, said compensating constant is dependent on characteristic values of the vibrating drivetrain system and/or on characteristic values which describe or at least co-describe the friction characteristic of the clutch device.

**41.** Method according to Claim 1, **characterized in that** said drivetrain has arranged in it a clutch device which can be operated in a slipping mode, and with determined juddering vibrations being counteracted by means of a modulation of the torque transmissible by the clutch device and/or of the clutch travel, and with said modulation being such that a modulated clutch setpoint torque is controlled which is determined as a difference between the unmodulated clutch torque and a product, wherein furthermore, said product has a first factor which is dependent on the angular speed of a clutch disc and/or on the angular speed of a transmission input shaft and/or on the angular speed of a wheel of the motor vehicle and/or on a transmission ratio which is assigned to a gear which is engaged in a transmission device arranged in the drivetrain, and with said product having a second factor which is a compensating constant, wherein furthermore said compensating constant is dependent on the clutch setpoint torque and/or on a nominal clutch torque which is determined assuming a nominal friction value and/or on a function of an average slip.

**42.** Method according to one of Claims 40 and 41, **characterized in that** the compensating constant is dependent on a function which describes how the friction value of the clutch device varies with the slip of the clutch device, and/or on the derivative with respect to time of such a function.

**43.** Method according to one of Claims 40 to 42, **characterized in that** the compensating constant is dependent on the period T of the juddering vibration.

**44.** Method according to one of Claims 40 to 43, **characterized in that** the compensating constant is dependent on the moment of inertia of a clutch disc and/or of the transmission input.

**45.** Method according to one of Claims 40 to 44, **characterized in that** the compensating constant is dependent on a nominal friction value of the clutch device.

**46.** Method according to one of Claims 40 to 45, **characterized in that** the compensating constant is dependent on a quotient of two chronologically successive amplitudes of the juddering vibration, specifically in particular on the logarithm of such a quotient.

**47.** Method according to one of Claims 25, 28, 29, 31 or 44, **characterized in that** the ramp rises to its target value within approximately one period of the juddering vibration.

**48.** Method according to Claim 1, **characterized in that** said drivetrain has arranged in it a clutch device which can be operated in a slipping mode, and with determined juddering vibrations being counteracted by means of a modulation of the torque transmissible by the clutch device and/or of the clutch travel, and with said modulation being such that the modulation is carried out according to a different characteristic in different segments.

**49.** Method according to Claim 1, **characterized in that** said drivetrain has arranged in it a clutch device which can be operated in a slipping mode, and with determined juddering vibrations being counteracted by means of a modulation of the torque transmissible by the clutch device and/or of the clutch travel, and with said modulation being of oscillatory form and having a first half-wave (68, 82) and if appropriate a second half-wave (70, 84), with the amplitude (66, 86) of the first half-wave being greater than the amplitude (88) of the second half-wave (70, 84).

**50.** Method according to Claim 49, **characterized in that** the modulation is stopped or ended after the second half-wave (70, 84), and the phase of the juddering vibration is determined, specifically in particular by means of at least one local extremum, such as a local maximum, of the juddering vibration and/or of the transmission input rotational speed.

**51.** Method according to Claim 49, **characterized in that** the amplitude (88) of the second half-wave (70, 84) is equal to "zero".

**52.** Method according to Claim 50, **characterized in that** the modulation is stopped or ended after the first half-wave (68, 82), and the phase of the juddering vibration is determined, specifically in particular by means of at least one local extremum, such as a local maximum, of the juddering vibration and/or of the transmission input rotational speed.

**53.** Method according to one of Claims 49 to 52, **characterized in that** the first half-wave (68, 82) and/or the second half-wave (70, 84) is a half-wave (68, 70, 82, 84) of a sinusoidal oscillation.

**54.** Method according to one of the preceding claims, **characterized in that** the modulation is started with a phase offset with respect to the juddering vibration.

**55.** Method according to Claim 54, **characterized in that** the modulation is started when a local extremum, in particular local maximum, of the juddering vibration has been detected.

**56.** Method according to one of the preceding claims, **characterized in that** the modulation is configured such that a tangent of the time profile of the modulation of the transmissible torque and/or of the clutch travel at the start and/or at the end of a half-wave (68, 70) runs substantially parallel to the time axis.

**57.** Method according to Claim 1, **characterized in that** said drivetrain has arranged in it a clutch device which can be operated in a slipping mode, and with determined juddering vibrations being counteracted by means of a modulation of the torque transmissible by the clutch device and/or of the clutch travel, and with said modulation being such that the modulation is determined as a function of the juddering vibration and/or of characteristic values which describe the juddering vibration and/or of a function which describes the juddering vibration and as a function of predetermined boundary conditions.

58. Method according to Claim 57, **characterized in that** the juddering vibration is described in particular as a function of the angle of twist of a predetermined drivetrain section.

59. Method according to one of the preceding claims, **characterized in that** the profile of the modulation is predefined as a function of variables, and said variables are at least partially fixed on the basis of the boundary conditions.

60. Method according to one of Claims 57 to 59, **characterized in that** one boundary condition is that the angle of twist at the point in time "zero" is the difference between the angle of twist which would be present under the given loading situation disregarding the juddering vibration, and the angular amplitude of the juddering vibration.

61. Method according to one of Claims 57 to 60, **characterized in that** one boundary condition is that the derivative with respect to time of the angle of twist at the point in time "zero" is equal to "zero".

62. Method according to one of Claims 57 to 61, **characterized in that** one boundary condition is that the angle of twist at the point in time of half the period duration of the juddering vibration corresponds to the angle of twist which would be present under the given loading situation disregarding the juddering vibration.

63. Method according to one of Claims 57 to 62, **characterized in that** one boundary condition is that the derivative with respect to time of the angle of twist at the point in time of half the period duration of the juddering vibration is equal to "zero".

64. Method according to one of Claims 57 to 63, **characterized in that** the period duration of the modulation of the torque transmissible by the clutch device and/or of the clutch travel corresponds to half the period duration of the juddering vibration.

65. Method according to one of Claims 57 to 64, **characterized in that** the torque transmissible by the clutch device and/or the clutch travel is modulated in absolute terms corresponding to a function a*sin($\omega$*t), where a is a factor, $\omega$ corresponds to 2*$\pi$ the frequency of the modulation oscillation, and t is the time.

**Revendications**

1. Procédé pour diminuer les saccades dans un train d'entraînement d'un véhicule automobile, le train d'entraînement pouvant être sollicité par un système d'entraînement, par exemple un moteur à combustion interne, et présentant un système d'embrayage ainsi qu'un système de transmission, le procédé présentant les étapes qui consistent à :

   - déterminer la présence éventuelle de saccades et/ou constater la présence de saccades,
   - ajuster et en particulier ajuster automatiquement un système qui s'oppose aux saccades, ce système étant disposé dans le train d'entraînement ou étant accouplé à ce dernier de telle sorte qu'un ajustement de ce système modifie une valeur caractéristique de rotation, par exemple le couple de rotation ou la vitesse de rotation, associée à un composant du train d'entraînement et que cette modification modifie l'évolution temporelle des saccades,
   **caractérisé en ce que**
   le couple de rotation qui peut être transmis par le système d'embrayage et/ou le parcours d'embrayage sont modulés pour s'opposer aux saccades.

2. Procédé selon la revendication 1, **caractérisé en ce que** le couple de rotation qui peut être transmis par le système d'embrayage et/ou le parcours d'embrayage sont modulé de manière sinusoïdale.

3. Procédé selon l'une des revendications précédentes, **caractérisé en ce qu'**il détermine au moins une valeur caractéristique prédéterminée de l'évolution temporelle des saccades et/ou une valeur caractéristique de rotation d'un composant du train d'entraînement, par exemple la vitesse de rotation à l'entrée de la transmission.

4. Procédé selon l'une des revendications précédentes, **caractérisé en ce que** la phase, l'amplitude ou la durée de la période des saccades sont déterminées en fonction de la vitesse de rotation à l'entrée de la transmission.

5. Procédé selon l'une des revendications précédentes, **caractérisé en ce que** la phase, l'amplitude ou la durée de la période de la modulation des vibrations du parcours d'embrayage et/ou du couple d'embrayage qui peut être transmis sont déterminées en fonction de la vitesse de rotation à l'entrée de la transmission.

6. Procédé selon l'une des revendications 3 à 5, **caractérisé en ce que** la vitesse de rotation à l'entrée de la transmission est mesurée.

7. Procédé selon l'une des revendications précédentes, **caractérisé en ce que** la vitesse de rotation à l'entrée de la transmission est mesurée de manière à délivrer des signaux de vitesse de rotation écartés les uns des autres dans le temps.

8. Procédé selon l'une des revendications précédentes, **caractérisé en ce que** la période, la phase et/ou l'amplitude du couple de rotation modulé qui peut être transmis par le système d'embrayage, du parcours d'accouplement modulé et/ou des saccades sont déterminées en fonction d'au moins un extremum local et en particulier d'au moins un maximum local de la vitesse de rotation qui a été déterminée à l'entrée de la transmission.

9. Procédé selon l'une des revendications précédentes, **caractérisé en ce que** la période, la phase et/ou l'amplitude du couple de rotation modulé qui peut être transmis par le système d'embrayage, du parcours d'accouplement modulé et/ou des saccades sont déterminées en fonction de la période, de la phase et/ou de l'amplitude qui ont été déterminées pour les saccades et/ou la vitesse de rotation à l'entrée de la transmission.

10. Procédé selon l'une des revendications précédentes, **caractérisé en ce que**

   - dans une première étape, une première valeur caractéristique des saccades et/ou de l'évolution temporelle de la vitesse de rotation à l'entrée de la transmission sont déterminées au moyen d'une estimation, d'une mesure et/ou d'un calcul et
   - **en ce que** dans une deuxième étape, cette première valeur caractéristique est déterminée en fonction du résultat de la première étape pour améliorer et/ou vérifier la précision de la valeur caractéristique déterminée dans la première étape.

11. Procédé selon la revendication 10, **caractérisé en ce que** la première valeur caractéristique est un extremum local de l'évolution temporelle des saccades et/ou de la vitesse de rotation à l'entrée de la transmission, ou la position dans le temps de cet extremum.

12. Procédé selon l'une des revendications précédentes, **caractérisé en ce que** la vitesse de rotation à l'entrée de la transmission est mesurée et/ou évaluée de telle sorte que des signaux de vitesse de rotation situés à distance dans le temps soient délivrés, **en ce que** dans une première étape, la position dans le temps d'au moins un extremum local et en particulier d'un maximum local de ces valeurs de mesure est déterminée, cet extremum local étant en particulier celui qui est apparu en dernier lieu dans l'évolution temporelle, et **en ce que** dans une deuxième étape, la position effective d'un extremum local et en particulier d'un maximum local des saccades et/ou de la vitesse de rotation à l'entrée de la transmission est déterminée et/ou approchée de manière plus précise.

13. Procédé selon la revendication 12, **caractérisé en ce que** la distance temporelle ou l'écart temporel entre l'extremum local, en particulier le maximum local, déterminé dans la première étape, et l'extremum local, en particulier le maximum local, déterminé dans la deuxième étape sont déterminés.

14. Procédé selon l'une des revendications précédentes, **caractérisé en ce que** dans une première étape, le déphasage des saccades et/ou de l'évolution temporelle de la vitesse de rotation à l'entrée de la transmission est déterminé, et dans ce but on utilise en particulier un extremum local, en particulier un maximum local, déterminé dans la première étape, de la vitesse de rotation à l'entrée de la transmission qui est un extremum local situé à distance dans le temps des signaux de vitesse de rotation délivrés, en particulier des signaux de vitesse de rotation mesurés, et **en ce que** dans une deuxième étape, l'écart entre le déphasage déterminé dans la première étape et le déphasage effectif et/ou l'écart entre l'extremum local déterminé dans la première étape et l'extremum effectif sont déterminés.

15. Procédé selon la revendication 14, **caractérisé en ce que** dans la détermination de l'écart, il tient compte du fait que la première étape a utilisé des signaux de vitesse de rotation situés à distance dans le temps et/ou des précisions de mesure qui découlent de la mesure de la vitesse de rotation effectuée dans la première étape.

16. Procédé selon l'une des revendications 14 et 15, **caractérisé en ce qu'**une commande ou évaluation prédéterminée, en particulier une évaluation des valeurs de mesure, a lieu une fois pendant une fenêtre temporelle ($T_{int}$) prédéterminée dans laquelle une valeur de mesure ou une paire de valeurs de mesure prédéterminées d'une valeur caractéristique prédéterminée, par exemple la vitesse de rotation à l'entrée de la transmission, est fournie ou prise en compte dans cette fenêtre temporelle, cette situation étant prise en compte dans la détermination de l'écart.

17. Procédé selon l'une des revendications 14 à 16, **caractérisé en ce que** la détermination de l'écart tient compte d'une éventuelle montée, essentiellement indépendante des saccades, de la vitesse de rotation à l'entrée de la transmission.

18. Procédé selon l'une des revendications 13 à 17, **caractérisé en ce que** la détermination de l'écart utilise une valeur caractéristique, plusieurs valeurs caractéristiques ou toutes les valeurs caractéristiques parmi les suivantes :

- une durée d'interruption $T_{int}$, la durée d'interruption Tint étant la durée d'une période au cours de laquelle une évaluation, en particulier une évaluation de la valeur de mesure de la vitesse angulaire de l'arbre d'entrée de la transmission, a lieu une fois et est préparée pour une valeur de mesure ou une paire de valeurs de mesure,
- une médiane, la médiane indiquant le centre de gravité de paires prédéterminées de valeurs de mesure, en particulier d'attributions de la vitesse angulaire de l'arbre d'entrée de la transmission à des instants auxquels ces vitesses angulaires prévalent,
- un instant ($t_{max}$) qui correspond à un extremum local, en particulier un maximum local, des signaux de vitesse de rotation ou de vitesse angulaire de l'arbre d'entrée de la transmission, délivrés à des intervalles de temps, qui ont été éventuellement constatés dans une première étape, ou qui leurs sont associés,
- un extremum local, en particulier un maximum local ($\omega_{max}$) qui correspond à des signaux délivrés à écart temporel de vitesse de rotation ou de vitesse angulaire de l'arbre d'entrée de la transmission et qui a éventuellement été constaté pendant une première étape,
- l'amplitude (A) des saccades, et en particulier la dernière amplitude des saccades,
- la fréquence des saccades ($\omega_{Rupfen}$) / ($2^*\pi$)),
- l'augmentation totale (moyenne) de la vitesse angulaire de l'arbre d'entrée (B) de la transmission et
- l'angle entre deux dents d'une sonde de position ($\varphi_{Puls}$).

19. Procédé selon l'une des revendications 13 à 18, **caractérisé en ce qu'**un extremum local effectif, en particulier un maximum, de la vitesse angulaire de l'arbre d'entrée de la transmission est déterminé et/ou approché au moyen de l'écart déterminé, et/ou **en ce que** la phase effective de la vitesse angulaire de l'arbre d'entrée de la transmission qui se déplace également en oscillation pendant les saccades est déterminée.

20. Procédé selon l'une des revendications 4, 5, 8, 9, 14, 19, **caractérisé en ce que** le déphasage déterminé dans la première étape, en particulier le déphasage de la vitesse angulaire de l'arbre d'entrée de la transmission et/ou des saccades, est utilisé d'abord pour la modulation du parcours de consigne de l'embrayage et/ou du couple de rotation qui peut être transmis par le système d'embrayage.

21. Procédé selon l'une des revendications 4, 5, 8, 9, 14, 19, 20, **caractérisé en ce que** pour la modulation du parcours de consigne de l'embrayage et/ou du couple de rotation qui peut être transmis par le système d'embrayage, il utilise le déphasage de la vitesse de rotation, de la vitesse angulaire de l'arbre d'entrée dans la transmission et/ou des saccades, qui dans une deuxième étape est au moins approché du déphasage effectif vitesse de rotation à l'entrée de la transmission et/ou des saccades, et/ou l'écart.

22. Procédé selon l'une des revendications 8 à 21, **caractérisé en ce qu'**il utilise l'écart temporel des positions temporelles d'un extremum, en particulier d'un maximum local, déterminé dans une première étape, de la vitesse de rotation à l'entrée de la transmission et une valeur d'un extremum local au moins approché de la position temporelle d'un extremum effectif, en particulier d'un maximum, pour modifier la durée de la période de la modulation du parcours de consigne d'embrayage et/ou du couple de rotation qui peut être transmis par le système d'embrayage, en particulier pour au moins approcher davantage le déphasage de ce parcours de consigne d'embrayage modulé et/ou du couple de rotation qui peut être transmis par le système d'embrayage du déphasage effectif de la vitesse de rotation de l'arbre d'entrée de la transmission.

**23.** Procédé selon la revendication 22, **caractérisé en ce que** la durée de la période de la modulation du parcours de consigne de transmission et/ou du couple de rotation qui peut être transmis par le système d'embrayage est modifiée de manière à être prolongée ou raccourcie de cet écart pendant une période.

**24.** Procédé selon l'une des revendications précédentes, **caractérisé en ce que** pour s'opposer aux saccades, le parcours de consigne d'embrayage et/ou le couple de rotation qui peut être transmis par le système d'embrayage sont modulés en fonction de l'extremum local, en particulier du maximum local, qui a été déterminé et/ou de sa position temporelle et/ou d'un écart déterminé.

**25.** Procédé selon l'une des revendications précédentes, **caractérisé en ce que** cette modification de position est prédéterminée en fonction d'une fonction prédéterminée et en particulier d'une fonction temporelle qui présente une fonction de rampe.

**26.** Procédé selon l'une des revendications précédentes, **caractérisé en ce que** la modification de la position du système s'oppose aux saccades dans des premiers intervalles de temps et **en ce que** la modification de la position du système est interrompue dans des deuxièmes intervalles de temps de telle sorte que le système puisse osciller librement pendant ces deuxièmes intervalles de temps.

**27.** Procédé selon l'une des revendications 25 et 26, **caractérisé en ce que** le système est un système d'embrayage, le couple de rotation qui peut être transmis par le système d'embrayage et/ou le parcours d'embrayage, en particulier le parcours de consigne d'embrayage, étant modulés pour s'opposer aux saccades.

**28.** Procédé selon l'une des revendications 25 à 27, **caractérisé en ce que** cette fonction en rampe présente une partie dans laquelle une rampe augmente d'une valeur initiale jusqu'à une certaine valeur, ainsi qu'un autre tronçon plus tardif dans lequel une rampe descend de cette valeur jusqu'à une valeur finale, en particulier à une valeur finale qui correspond à la valeur initiale.

**29.** Procédé selon l'une des revendications 25 à 28, **caractérisé en ce que** cette fonction en rampe présente au moins une première partie dans laquelle une rampe monte d'une valeur initiale jusqu'à une certaine valeur, au moins une deuxième partie qui se raccorde à la première et au cours de laquelle la fonction en rampe est maintenue à cette valeur constante, ainsi qu'au moins une troisième partie qui se raccorde à la précédente et au cours de laquelle la fonction en rampe est amenée à descendre de cette valeur constante jusqu'à une valeur finale, en particulier une valeur finale qui correspond à la valeur initiale.

**30.** Procédé selon la revendication 29, **caractérisé en ce que** la valeur constante est essentiellement égale à "un".

**31.** Procédé selon l'une des revendications 25 à 30, **caractérisé en ce que** la valeur initiale et la valeur finale de la fonction en rampe sont toutes deux égales à "zéro".

**32.** Procédé selon l'une des revendications 25 à 31, **caractérisé en ce que** le parcours d'embrayage modulé est déterminé en fonction d'un facteur de régulation et en particulier en fonction d'une constante de régulation.

**33.** Procédé selon l'une des revendications 25 à 32, **caractérisé en ce que** le parcours d'embrayage modulé est déterminé en fonction de l'amplitude des saccades et en particulier en fonction de celle découverte en dernier lieu.

**34.** Procédé selon l'une des revendications 25 à 33, **caractérisé en ce que** le parcours d'embrayage modulé est déterminé en fonction d'une fonction sinusoïdale, et en particulier en fonction d'une fonction sinusoïdale qui dépend de la fréquence des saccades, de la durée et/ou d'un déphasage déterminé entre les saccades et l'évolution de la modulation du parcours.

**35.** Procédé selon la revendication 33 et la revendication 34, **caractérisé en ce que** le parcours d'embrayage modulé est déterminé en fonction d'une amplitude des saccades et en fonction d'une fonction sinusoïdale, cette amplitude étant actualisée lorsque la fonction sinusoïdale passe par zéro, en particulier en fonction de la vitesse de rotation à l'entrée de la transmission.

**36.** Procédé selon l'une des revendications précédentes, **caractérisé en ce que** la modification de l'ajustement du dispositif et en particulier la modulation du parcours d'embrayage dans des premiers intervalles de temps alterne avec l'absence de modification de cet ajustement dans des deuxièmes intervalles de temps lorsque la présence de saccades est constatée, en particulier jusqu'à ce qu'il soit constaté que l'amplitude des saccades est inférieure à une valeur prédéterminée de débranchement.

37. Procédé selon l'une des revendications 25 à 36, **caractérisé en ce que** la durée des premiers intervalles de temps est comprise entre une et cinq périodes des saccades et en particulier entre deux et trois périodes des saccades.

38. Procédé selon l'une des revendications 25 à 37, **caractérisé en ce que** le parcours d'embrayage modulé est déterminé en fonction du déphasage entre les saccades et l'évolution de la modulation du parcours de consigne et/ou en fonction d'une fonction sinusoïdale qui dépend de ce déphasage, ce déphasage effectif étant actualisé dans des deuxièmes périodes de temps.

39. Procédé selon l'une des revendications 25 à 38, **caractérisé en ce que** le parcours d'embrayage modulé est déterminé en fonction d'un déphasage entre les saccades et l'évolution de la modulation du parcours de consigne et/ou en fonction d'une fonction sinusoïdale qui dépend de ce déphasage, ce déphasage effectif étant considéré comme constant au cours de premières périodes de temps pour la modulation du parcours d'embrayage, en particulier en correspondance au moins partielle à une valeur qui a été déterminée pendant une deuxième période de temps précédente.

40. Procédé selon la revendication 1, **caractérisé en ce que** ce train d'entraînement présente un système d'embrayage qui peut être utilisé en glissement, une modulation du couple de rotation qui peut être transmis par le système d'embrayage et/ou du parcours d'embrayage s'opposant aux saccades qui ont été déterminées, cette modulation étant telle qu'un couple de consigne d'embrayage modulé qui est déterminé comme étant la différence entre le couple d'embrayage non modulé et un produit est commandé, ce produit présentant en outre un premier facteur qui dépend de la vitesse angulaire d'un disque d'embrayage, de la vitesse angulaire d'un arbre d'entrée de la transmission, de la vitesse angulaire d'une roue du véhicule automobile et/ou d'un rapport de transmission associé au rapport engagé dans le système de transmission prévu dans le train d'entraînement, ce produit présentant un deuxième facteur qui est une constante de régulation, cette constante de régulation dépendant de valeurs caractéristiques du système oscillant du train d'entraînement et/ou de valeurs caractéristiques qui décrivent au moins implicitement la caractéristique de frottement du système d'embrayage.

41. Procédé selon la revendication 1, **caractérisé en ce que** ce train d'entraînement présente un système d'embrayage qui peut être utilisé en glissement, une modulation du couple de rotation qui peut être transmis par le système d'embrayage et/ou du parcours d'embrayage s'opposant aux saccades qui ont été déterminées, cette modulation étant telle qu'un couple de consigne d'embrayage modulé qui est déterminé comme étant la différence entre le couple d'embrayage non modulé et un produit est commandé, ce produit présentant en outre un premier facteur qui dépend de la vitesse angulaire d'un disque d'embrayage, de la vitesse angulaire d'un arbre d'entrée de la transmission, de la vitesse angulaire d'une roue du véhicule automobile et/ou d'un rapport de transmission associé au rapport engagé dans le système de transmission prévu dans le train d'entraînement, ce produit présentant un deuxième facteur qui est une constante de régulation, cette constante de régulation dépendant du couple de consigne d'embrayage et/ou d'un couple nominal d'embrayage qui est déterminé en posant l'hypothèse d'une valeur de frottement nominale, et/ou d'une fonction d'un glissement moyen.

42. Procédé selon l'une des revendications 40 ou 41, **caractérisé en ce que** la constante de régulation dépend d'une fonction qui décrit comment la valeur de frottement du dispositif d'embrayage varie en fonction du glissement du système d'embrayage et/ou de la dérivée par rapport au temps de cette fonction.

43. Procédé selon l'une des revendications 40 à 42, **caractérisé en ce que** la constante de régulation dépend de la période T des saccades.

44. Procédé selon l'une des revendications 40 à 43, **caractérisé en ce que** la constante de régulation dépend du couple d'inertie d'un disque d'embrayage et/ou de l'entrée de la transmission.

45. Procédé selon l'une des revendications 40 à 44, **caractérisé en ce que** la constante de régulation dépend d'une valeur nominale du frottement du système d'embrayage.

46. Procédé selon l'une des revendications 40 à 45, **caractérisé en ce que** la constante de régulation dépend du quotient de deux amplitudes successives des saccades, en particulier du logarithme de ce quotient.

**47.** Procédé selon l'une des revendications 25, 28, 29, 31 ou 44, **caractérisé en ce que** la valeur cible de la rampe s'établit sensiblement au cours d'une période des saccades.

**48.** Procédé selon la revendication 1, **caractérisé en ce qu'**un système d'embrayage qui peut fonctionner en glissement est disposé dans ce train d'entraînement, et dans lequel une modulation du couple de rotation qui peut être transmis par le système d'embrayage et/ou du parcours d'embrayage s'oppose aux saccades déterminées, cette modulation étant telle que la modulation est exécutée en différentes parties selon des caractéristiques différentes.

**49.** Procédé selon la revendication 1, **caractérisé en ce qu'**un système d'embrayage qui peut fonctionner en glissement est disposé dans ce train d'entraînement, et dans lequel une modulation du couple de rotation qui peut être transmis par le système d'embrayage et/ou du parcours d'embrayage s'oppose aux saccades déterminées, cette modulation étant telle qu'elle est configurée de manière oscillante et présente une première demi-onde (68, 82) ainsi qu'éventuellement une deuxième demi-onde (70, 84), l'amplitude (66, 86) de la première demi-onde étant plus grande que l'amplitude (88) de la deuxième demi-onde (70, 84).

**50.** Procédé selon la revendication 49, **caractérisé en ce que** la modulation est interrompue ou arrêtée après la deuxième demi-onde (70, 84) et **en ce que** la phase des saccades est déterminée, en particulier au moyen d'au moins un extremum local, par exemple un maximum local, des saccades et/ou de la vitesse de rotation à l'entrée de la transmission.

**51.** Procédé selon la revendication 49, **caractérisé en ce que** l'amplitude (88) de la deuxième demi-onde (70, 84) est égale à "zéro".

**52.** Procédé selon la revendication 50, **caractérisé en ce que** la modulation est interrompue ou terminée après la première demi-onde (68, 82) et **en ce que** la phase des saccades est déterminée, en particulier au moyen d'au moins un extremum local, par exemple un maximum local, des saccades et/ou de la vitesse de rotation à l'entrée de la transmission.

**53.** Procédé selon l'une des revendications 49 à 52, **caractérisé en ce que** la première demi-onde (68, 82) et/ou la deuxième demi-onde (70, 84) sont des demi-ondes (68, 70, 82, 84) d'une oscillation sinusoïdale.

**54.** Procédé selon l'une des revendications précédentes, **caractérisé en ce que** la modulation est lancée à un décalage de phase par rapport aux saccades.

**55.** Procédé selon la revendication 54, **caractérisé en ce que** la modulation est lancée lorsqu'un extremum local, en particulier un maximum local, des saccades a été constaté.

**56.** Procédé selon l'une des revendications précédentes, **caractérisé en ce que** la modulation est configurée de telle sorte qu'une tangente de l'évolution temporelle de la modulation du couple de rotation transmis et/ou du parcours d'embrayage au début et/ou à la fin d'une demi-onde (68, 70) est essentiellement parallèle à l'axe du temps.

**57.** Procédé selon la revendication 1, **caractérisé en ce qu'**un système d'embrayage qui peut fonctionner en glissement est disposé dans ce train d'entraînement et **en ce qu'**une modulation du couple de rotation qui peut être transmis par le système d'embrayage et/ou du parcours d'embrayage s'oppose aux saccades déterminées, cette modulation étant telle que la modulation est déterminée en fonction des saccades, de valeurs caractéristiques qui décrivent les saccades et/ou d'une fonction qui décrit les saccades, ainsi qu'en fonction de conditions aux limites prédéterminées.

**58.** Procédé selon la revendication 57, **caractérisé en ce que** les saccades sont décrites en particulier en fonction de l'angle de torsion d'une partie prédéterminée du train d'entraînement.

**59.** Procédé selon l'une des revendications précédentes, **caractérisé en ce que** l'évolution de la modulation est prédéterminée en fonction de variables et **en ce que** ces variables sont définies au moins en partie à l'aide de conditions aux limites.

**60.** Procédé selon l'une des revendications 57 à 59, **caractérisé en ce qu'**une condition aux limites est que l'angle de torsion à l'instant "zéro" correspond à la différence entre l'angle de torsion qui aurait prévalu dans un cas de sollicitation donné, compte non tenu des saccades, et l'amplitude angulaire des saccades.

**61.** Procédé selon l'une des revendications 57 à 60, **caractérisé en ce qu'**une condition aux limites est que la dérivée temporelle de l'angle de torsion à l'instant "zéro" est égale à "zéro".

**62.** Procédé selon l'une des revendications 57 à 61, **caractérisé en ce qu'**une condition aux limites est que l'angle de torsion à l'instant de la durée de la demi-période des saccades correspond à l'angle de torsion qui aurait prévalu dans un cas de sollicitation donné, compte non tenu des saccades.

**63.** Procédé selon l'une des revendications 57 à 62, **caractérisé en ce qu'**une condition aux limites est que la dérivée temporelle de l'angle de torsion à l'instant de la demi-durée d'une période des saccades est égale à "zéro".

**64.** Procédé selon l'une des revendications 57 à 63, **caractérisé en ce que** la durée de la période de la modulation du couple de rotation qui peut être transmis par le système d'embrayage et/ou du parcours d'embrayage correspond à la moitié de la durée d'une période des saccades.

**65.** Procédé selon l'une des revendications 57 à 64, **caractérisé en ce que** le couple de rotation qui peut être transmis par le système d'embrayage et/ou le parcours d'embrayage a une valeur modulée selon une fonction a*sin($\omega$*t), a étant un facteur, $\omega$ le produit par $2\pi$ de la fréquence des oscillations de la modulation et t représentant le temps.

# Fig. 1

# Fig. 2

# Fig. 3

Drei Punkte bei der Berechnung der Mediane

EP 1 540 201 B1

# Fig. 4

**Getriebeeingangsdrehzahl**

$T_{i\_Drehzahl}$

**Istweg des Kupplungsstellers**

$\Delta t = t_{max\_Weg} - t_{max\_Drehzahl}$

38

# Fig. 5

```
        ┌──────────┐
        │    40    │
        └────┬─────┘
             │
             ▼
        ┌──────────┐
        │    42    │
        └────┬─────┘
             │
             ▼────────────────◄─┐
        ┌──────────┐            │
        │    44    │            │
        └──┬────┬──┘            │
           │    │              │
   ┌───────┘    ▼              │
   ▼       ┌──────────┐        │
┌──────┐   │    46    │────────┘
│  48  │   └──────────┘
└──────┘
```

# Fig. 6

```
        ┌──────────┐
        │    50    │
        └────┬─────┘
             │
             ▼
        ┌──────────┐
        │    52    │
        └──────────┘
```

## Fig. 7

# Fig. 8

# Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19536320 A1